# EUROPÄISCHE PATENTANMELDUNG

(11) **EP 3 461 852 A1**
(43) Veröffentlichungstag der Anmeldung: **03.04.2019**
(21) Anmeldenummer: 17193623.0
(22) Anmeldetag: 28.09.2017
(51) Int. Cl.: C08G 18/50, C08G 64/02, C08G 64/18, C08G 65/336

(54) **VERFAHREN ZUR HERSTELLUNG EINES MEHRFACHBINDUNGEN ENTHALTENDEN POLYMERS ALS ELASTOMER-VORSTUFE**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die vorliegende Erfindung betrifft ein Verfahren zur Herstellung eines Organooxysilyl-Endgruppen enthaltenden Polymers, wobei das Verfahren zunächst die Reaktion eines Kohlenstoff- Kohlenstoff-Mehrfachbindungen enthaltenden Polyoxyalkylenpolyols mit einer Organooxysilylverbindung der Formel Si(X)n(R)4-n in Gegenwart eines Katalysators umfasst wobei X unabhängig voneinander für C1-C8-Alkoxy, C7-C20-Aralkoxy, C6-C14-Aroxy, C7-C20-Alkylaroxy, C1-C20- Acyloxy steht; R unabhängig voneinander für gesättigtes oder ungesättigtes C1-C22-Alkyl, C6-C14-Aryl, C7-C14-Aralkyl, C7-C14- Alkylaryl steht und n ist 2, 3 oder 4 ist. Weiterhin umfasst die Erfindung ein Verfahren zur Herstellung einer Elastomer-Vorstufe aus dem Organooxysilyl-Endgruppen enthaltenden Polymer sowie die nach diesen Verfahren erhältlichen Produkte.

## Beschreibung

Die vorliegende Erfindung betrifft ein Verfahren zur Herstellung eines Organooxysilyl-Endgruppen enthaltenden Polymers und ein Verfahren zur Herstellung einer Elastomer-Vorstufe. Sie betrifft weiterhin die nach diesen Verfahren erhältlichen Produkte.

Die Herstellung von Polyethercarbonatpolyolen durch katalytische Umsetzung von Alkylenoxiden (Epoxiden) und Kohlendioxid in Anwesenheit von H-funktionellen Startersubstanzen ("Starter") wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkylaryl oder Aryl steht, der jeweils auch Heteroatome wie beispielsweise O, S, Si usw. enthalten kann, und wobei e, f und g für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema (I) gezeigte Polyethercarbonatpolyol beschränkt ist. Diese Reaktion (siehe Schema (I)) ist ökologisch sehr vorteilhaft, da diese Reaktion die Umsetzung eines Treibhausgases wie CO₂ zu einem Polymer darstellt. Als weiteres Produkt, eigentlich Nebenprodukt, entsteht das in Schema (I) gezeigte cyclische Carbonat (beispielsweise für R = CH₃ Propylencarbonat).

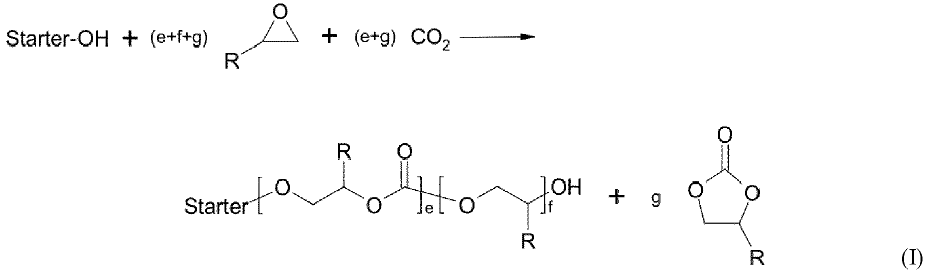

EP 2 845 872 A1 offenbart ein Verfahren zur Herstellung von Polyethercarbonatpolyolen mit Seitenketten umfassend die Schritte: (α) Vorlegen eines Katalysators und: (αα) eines Suspensionsmittels, das keine H-funktionellen Gruppen enthält und/oder (αβ) einer H-funktionellen Startersubstanz; (γ) Zudosieren von Kohlendioxid und mindestens zweier Alkylenoxide, wobei diese Alkylenoxide von dem im Schritt (β) zudosierten Alkylenoxid oder zudosierten Alkylenoxiden gleich oder verschieden sein können, wobei die Differenz des Molekulargewichts des leichtesten und des schwersten der in der Stufe (γ) zudosierten Alkylenoxide größer oder gleich 24 g/mol beträgt und das leichteste Alkylenoxid ein C2-C4-Alkylenoxid ist und wobei weiterhin für den Fall, dass in Schritt (α) keine H-funktionelle Startersubstanz vorgelegt wurde, Schritt (γ) das Zudosieren einer H-funktionellen Startersubstanz umfasst. Beansprucht wird ferner die Verwendung des Polyethercarbonatpolyols als vernetzbare Komponente innerhalb einer Vernetzungsreaktion zur Herstellung duromerer oder elastomerer Netzwerke.

Ungesättigte Polyethercarbonatpolyole sind über ihre Kohlenstoff-Kohlenstoff Mehrfachbindungen vernetzbar. So offenbart WO 2015/032645 A1 ein Verfahren zur Herstellung Mercapto-vernetzter Polyethercarbonate, wobei Doppelbindungen enthaltende Polyethercarbonatpolyole mit polyfunktionellen Mercaptanen und/oder Schwefel unter Einwirkung von Initiatorverbindungen zur Reaktion gebracht werden.

Eine andere denkbare Quervernetzungsreaktion ist die Umsetzung der ungesättigten Polyethercarbonatpolyole mit Radikalstartern. Für einen Einsatz der ungesättigten Polyethercarbonatpolyole in der Herstellung von Elastomeren ist jedoch ihr nach dem heutigen Stand erreichbares Molekulargewicht mindestens um den Faktor 10 zu niedrig.

Um das Molekulargewicht vor einer Quervernetzungsreaktion zu erhöhen, könnte die Ausbildung von Si-O-Si-Brücken eine Möglichkeit darstellen. Hierzu muss zunächst die dafür nötige Funktionalität in das Polyol eingeführt werden.

Die Veröffentlichung von B. Kanner et al., I&EC Product Research and Development, 6(2), 1967, 88-92 beschreibt ein Verfahren zur Herstellung von Siloxan-Polyether-Copolymeren, die als oberflächenaktive Substanz Verwendung finden. Eine Verwendung von ungesättigten Polyethern wird nicht genannt.

DE 10 2008 000 360 A1 offenbart die Herstellung Alkoxysilylgruppen tragender Polyetheralkohole durch Alkoxylierung epoxidfunktioneller Alkoxysilane unter Verwendung von DMC-Katalysatoren. Auch die Copolymerisation mit einer Reihe weiterer Comonomere, insbesondere weiterer Epoxide, aber auch Kohlendioxid ist genannt. Mit Beispiel 6 enthält DE 10 2008 000 360 A1 ein konkretes Beispiel zur Copolymerisation eines epoxidfunktionellen Alkoxysilans mit Propylenoxid und Kohlendioxid. Der erzielte Carbonatgehalt liegt in diesem Fall bei ca. 4 Gew.-%.

WO 2012/136657 A1 betrifft nach eigenen Angaben ein Verfahren, das den Einbau eines hohen Anteils an Kohlendioxid in das Copolymer und gleichzeitig den Einsatz empfindlicher Epoxide, wie insbesondere epoxidfunktionellen Alkoxysilanen erlaubt.

In beiden letztgenannten Patentanmeldungen wird eine Molekulargewichtserhöhung durch Ausbildung von Si-O-Si-Brücken nicht offenbart. Ferner enthalten die betreffenden Polyole keine Kohlenstoff-Kohlenstoff-Doppelbindungen.

Im Stand der Technik werden terminale Alkoxysilylgruppen an polymere Polyole beispielsweise durch eine zweistufige Reaktionssequenz eingeführt, bei der die OH-Gruppen des Polyols mit einer Base deprotoniert werden und mit Allylhalogenid umgesetzt werden. Anschließend erfolgt eine Hydrosilylierung mit einer Verbindung wie Dimethoxymethylsilan (MeO)₂Si(H)Me. US 6,437,071 ist ein Vertreter solcher Veröffentlichungen. Nach der Hydrosilylierung enthalten die betreffenden Polyole keine C=C-Doppelbindungen.

EP 1 509 533 A1 offenbart ein Verfahren zur Herstellung von organischen Polyolsilanen, wobei das Verfahren aufweist: (a) Vereinigen mindestens eines Alkoxysilans mit einem oder mehreren organischen Polyolen, entweder unverdünnt oder in Gegenwart eines polaren Lösungsmittels, und Erhitzen auf erhöhte Temperaturen während einer ausreichenden Zeitdauer für die Reaktion des (der) Alkoxysilan(e) mit dem (den) organischen Polyol(en), um polyolsubstituierte Silane und alkoxy-derivierte Alkohole ohne Verwendung eines Katalysators zu erzeugen, wobei die polyolsubstituierten Silane keine Restalkoxygruppen enthalten; und (b) Entfernen der alkoxyderivierten Alkohole. Wenn, wie in dieser Patentanmeldung vorgesehen, keine Restalkoxygruppen vorhanden sind, kann auch keine Molekulargewichtserhöhung durch den intramolekularen Aufbau von Si-O-Si-Gruppen erfolgen.

Es ist wünschenswert, die Herstellung von Elastomeren in einem zweistufigen Verfahren durchzuführen. In einem ersten Schritt wird eine Elastomer-Vorstufe bereitgestellt, welche noch nicht zu einem festen dreidimensionalen Netzwerk reagiert hat und daher auf Maschinen verarbeitbar und insbesondere formbar ist. In dem sich daran anschließenden Endvernetzungsschritt wird dann das Elastomer erhalten.

Die vorliegende Erfindung hat sich die Aufgabe gestellt, ein Verfahren zur Herstellung einer Elastomer-Vorstufe und deren Vorstufe bereitzustellen, bei dem ungeachtet ihres Molekulargewichts derzeit verfügbare Polyoxyalkylenpolyole eingesetzt werden können.

Erfindungsgemäß gelöst wurde die Aufgabe in einem ersten Aspekt durch ein Verfahren zur Herstellung eines Organooxysilyl-Endgruppen enthaltenden Polymers, wobei das Verfahren den Schritt umfasst:
A) Reaktion eines Kohlenstoff-Kohlenstoff Doppelbindungen enthaltenden Polyoxyalkylenpolyols, bevorzugt eines Kohlenstoff-Kohlenstoff Doppelbindungen enthaltenden Polyethercarbonatpolyols, mit einer Organooxysilylverbindung der Formel Si(X)n(RO)4-n in Gegenwart eines Katalysators (A),
   wobei gilt:
   X steht unabhängig voneinander für C1-C8-Alkoxy, C7-C20-Aralkoxy, C6-C14-Aroxy, C7-C20-Alkylaroxy, C1-C20-Acyloxy;
   R0 steht unabhängig voneinander für gesättigtes oder ungesättigtes C1-C22-Alkyl, C6-C14-Aryl, C7-C14-Aralkyl, C7-C14- Alkylaryl
   und n ist 3 oder 4.

Ferner wurde die Aufgabe in einem zweiten Aspekt gelöst durch ein Verfahren zur Herstellung einer Elastomer-Vorstufe, wobei das Verfahren den Schritt umfasst:
B) Erhitzen eines Organooxysilyl-Endgruppen enthaltenden Polymers gemäß Anspruch 11 auf eine Temperatur von ≥ 65 °C in Gegenwart eines Katalysators (B).

Ohne auf eine Theorie beschränkt zu sein wird angenommen, dass in Schritt A) die difunktionelle, trifunktionelle oder tetrafunktionelle Organooxysilylverbindung mit freien OH-Gruppen des Polyols unter Abspaltung des entsprechenden Alkohols reagiert. In Schritt B) erfolgt dann durch intramolekulare Kondensation die Erhöhung des Molekulargewichts, wodurch die Elastomer-Vorstufe erhalten werden kann.

Durch die erfindungsgemäße Zugabe einer Organooxysilylverbindung zu einem bereits mit zumindest einer Doppelbindung funktionalisierten Polyoxyalkylen wird eine effiziente und selektive Verfahrensführung ermöglicht. Im Gegensatz zu einer *in situ* Einpolymerisation von Verbindungen enthaltend Organooxysilyl-Gruppen schon im Rahmen der Terpolymerisation zur Herstellung des Polyoxyalkylens, zum Beispiel durch die Zugabe epoxyfunktioneller Silane, lässt sich durch das erfindungsgemäße Verfahren in Schritt A) die stöchiometrische Zusammensetzung und der Aufbau des Polymers deutlich besser steuern.

So entgeht man durch die erfindungsgemäße Syntheseführung in Schritt A) der Gefahr einer vorzeitigen Vernetzung des Polymers schon während der Synthese oder Aufarbeitung. Insbesondere könnten ansonsten bei den hohen Polymerisationstemperaturen die OH-Endgruppen der OHfunktionellen Startersubstanzen oder des gebildeten Polymers mit den Organooxysilyl-Gruppen unter Umetherung reagieren.

Des Weiteren kann der im Stand der Technik erforderliche Einsatz epoxyfunktioneller Silane die Reaktionsgeschwindigkeiten und/oder die Menge des eingebauten CO₂ in für die angedachte Applikation der Polymere unerwünschter Weise beeinflussen. Die erfindungsgemäße Syntheseführung in Schritt A) mit nachgelagerter Organooxysilyl-Funktionalisierung führt hingegen zu einer deutlich größeren Anzahl an Verfahrens-Freiheitsgraden.

Beispiele für erfindungsgemäß geeignete Polyoxyalkylenpolyole sind Polyetherpolyole, Polyethercarbonatpolyole, Polyetheresterpolyole und/oder Polyetherestercarbonatpolyole.

Es können auch Mischungen mehrerer Polyole und/oder Organooxysilylverbindungen eingesetzt werden.

Die Reaktion in Schritt A) wird vorzugsweise nach den Maßstäben gängiger Laborpraxis durchgeführt, das heißt insbesondere für eine vorbestimmte Zeitdauer, bei einer vorbestimmten Temperatur, unter Kontrolle des Reaktionsfortschritts und mit einer Aufreinigung des Reaktionsprodukts.

Die vorbestimmte Zeitdauer kann beispielsweise > 1 Stunde bis ≤ 12 Stunden betragen. Geeignete Reaktionstemperaturen sind insbesondere ≥ 80 °C bis ≤ 120 °C. Der Reaktionsfortschritt lässt sich zweckmäßigerweise durch IR-Spektroskopie anhand der Abnahme der O-H-Streckschwingungsbande des Polyol-Edukts überwachen.

Es ist ferner günstig, wenn nach der vorbestimmten Reaktionsdauer das Reaktionsprodukt aufgereinigt wird. Auf diese Weise werden unerwünschte Nachreaktionen vermieden und die Lagerstabilität des erhaltenen Produkts wird verbessert. Vorzugsweise erfolgt die Aufreinigung durch Anlegen von Unterdruck. So können nicht reagierte Organooxysilylverbindungen und, zumindest teilweise, der Katalysator entfernt werden.

Ausführungsformen der vorliegenden Erfindung und weitere Aspekte werden nachfolgend erläutert. Sie können beliebig miteinander kombiniert werden, sofern sich aus dem Kontext nicht eindeutig das Gegenteil ergibt.

In einer Ausführungsform des erfindungsgemäßen Verfahrens ist das Kohlenstoff-Kohlenstoff mehrfachbindungshaltige Polyoxyalkylenpolyol erhältlich ist durch Anlagerung von Alkylenoxid, Kohlenstoff-Kohlenstoff mehrfachbindungshaltiges Monomer und CO₂ an H-funktionelle Startersubstanz in Gegenwart eines Doppelmetallcyanid-Katalysators.

Vorzugsweise beträgt der Anteil des Kohlenstoff-Kohlenstoff mehrfachbindungshaltigen Monomers ≥ 0,1 Gew.-% bis ≤ 60 Gew.-%, bevorzugt > 0,5 Gew.-% bis ≤ 30 Gew.-% und besonders bevorzugt ≥ 1,0 Gew.-% bis ≤ 15 Gew.%., bezogen auf die Gesamtstoffmenge an eingesetztem Alkylenoxid, Kohlendioxid und des Kohlenstoff-Kohlenstoff mehrfachbindungshaltigen Monomers.

So kann die Herstellung der Doppelbindungen enthaltenden Polyoxyalkylenpolyole die Schritte:
(α) Vorlegen eines Katalysators und:
   (αα) eines Suspensionsmittels, das keine H-funktionellen Gruppen enthält und/oder
   (αβ) einer H-funktionellen Startersubstanz,
(γ) Zudosieren von Kohlendioxid und
   - mindestens zweier Alkylenoxide, wobei mindestens eines der beiden Epoxide eine Doppelbindung aufweist
      oder
   - eines Alkylenoxides und eines ungesättigten cyclischen Anhydrids,
umfassen.

Es ist hierbei bevorzugt, dass dieses Verfahren weiterhin den Schritt (β) zwischen Schritt (α) und Schritt (γ) umfasst:
(β) Zudosieren mindestens eines Alkylenoxides, wobei das oder die in Schritt (γ) zudosierten Alkylenoxide von dem im Schritt (β) zudosierten Alkylenoxid oder zudosierten Alkylenoxiden gleich oder verschieden sein können.

Durch die Wahl geeigneter ungesättigter Verbindungen in der Synthese des Mehrfachbindungen enthaltenden Polyoxyalkylenpolyols können Polymere erhalten werden können, welche im Vergleich zum Stand der Technik besonders günstige Eigenschaften aufweisen. Die Mehrfachbindungen enthaltenden Polyoxyalkylenpolyole lassen sich reproduzierbar in hoher Ausbeute erhalten und zeigen durch die gewählte Verfahrensführung eine enge Molekularmassenverteilung und nur einen sehr geringen Anteil an nicht reagierten Monomeren. Durch Einbau cyclischer Anhydride in die gebildete Polymerkette kann das gebildete Polyoxyalkylenpolyol neben Ether- und Carbonatgruppen zusätzlich Estergruppen enthalten.

Des Weiteren kann innerhalb einer bevorzugten Ausführungsform des Verfahrens zur Herstellung der Mehrfachbindungen enthaltenden Polyoxyalkylenpolyole die Temperatur im Schritt (γ) größer oder gleich 60°C und kleiner oder gleich 150°C betragen. Dieser Temperaturbereich während der Polymerisation hat sich als besonders geeignet erwiesen, um mit einer hinreichenden Reaktionsgeschwindigkeit und mit einer hohen Selektivität, die Mehrfachbindungen enthaltenden Polyoxyalkylenpolyole zu synthetisieren. Im Bereich niedrigerer Temperaturen kann sich eine nur ungenügende Reaktionsgeschwindigkeit einstellen und bei höheren Temperaturen kann der Anteil an unerwünschten Nebenprodukten zu stark ansteigen.

In dem erfindungsgemäßen einsetzbaren Verfahren können als Monomere ohne ungesättigte Gruppen Alkylenoxide mit 2 - 45 Kohlenstoffatomen eingesetzt werden, die keine Mehrfachbindung tragen. Bei den Alkylenoxiden mit 2 - 45 Kohlenstoffatomen handelt es sich beispielsweise um eine oder mehrere Verbindungen ausgewählt aus der Gruppe umfassend Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, Alkylenoxide von C6-C22 α-Olefinen, wie 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Cyclopentenoxid, Cyclohexenoxid, Cycloheptenoxid, Cyclooctenoxid, Styroloxid, Methylstyroloxid, Pinenoxid, ein-oder mehrfach epoxidierte Fette als Mono-, Di- und Triglyceride, epoxidierte Fettsäuren, C1-C24-Ester epoxidierter Fettsäuren, Epichlorhydrin, Glycidol, und Derivate des Glycidols wie beispielsweise Glycidylether von C1-C22 Alkanolen, Glycidylester von C1-C22 Alkancarbonsäuren. Beispiele für Derivate des Glycidols sind Phenylglycidylether, Kresylglycidylether, Methylglycidylether, Ethylglycidylether und 2-Ethylhexylglycidylether. Vorzugsweise können als Alkylenoxide Ethylenoxid und/oder Propylenoxid, insbesondere Propylenoxid eingesetzt werden.

Für die Herstellung der erfindungsgemäß einsetzbaren Mehrfachbindungen enthaltenden Polyoxyalkylenpolyole wird weiterhin eine H-funktionelle Startersubstanz eingesetzt.

Die Suspensionsmittel, die in Schritt (α) zum Suspendieren des DMC-Katalysators eingesetzt werden, enthalten keine H-funktionellen Gruppen.

Als Suspensionsmittel sind alle polar-aprotischen, schwach polar-aprotischen und unpolaraprotischen Lösungsmittel geeignet, die jeweils keine H-funktionellen Gruppen enthalten. Als Suspensionsmittel können auch eine Mischung aus zwei oder mehrerer dieser Suspensionsmittel eingesetzt werden. Beispielhaft seien an dieser Stelle folgende polar-aprotischen Lösungsmittel genannt: 4-Methyl-2-oxo-1,3-dioxolan (im Folgenden auch als cyclisches Propylencarbonat bezeichnet), 1,3-Dioxolan-2-on, Aceton, Methylethylketon, Acetonitril, Nitromethan, Dimethylsulfoxid, Sulfolan, Dimethylformamid, Dimethylacetamid und *N*-Methylpyrrolidon. Zu der Gruppe der unpolar- und schwach polar-aprotischen Lösungsmittel zählen z.B. Ether, wie z.B. Dioxan, Diethylether, Methyl-tert-Butylether und Tetrahydrofuran, Ester, wie z.B. Essigsäureethylester und Essigsäurebutylester, Kohlenwasserstoffe, wie z.B. Pentan, n-Hexan, Benzol und alkylierte Benzolderivate (z.B. Toluol, Xylol, Ethylbenzol) und chlorierte Kohlenwasserstoffe, wie z.B., Chloroform, Chlorbenzol, Dichlorbenzol und Tetrachlorkohlenstoff. Bevorzugt als Suspensionsmittel werden 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Suspensionsmittel eingesetzt, besonders bevorzugt ist 4-Methyl-2-oxo-1,3-dioxolan und 1,3-Dioxolan-2-on oder eine Mischung aus 4-Methyl-2-oxo-1,3-dioxolan und 1,3-Dioxolan-2-on.

In einer alternativen Ausführungsform werden als Suspensionsmittel, die in Schritt (α) zum Suspendieren des DMC-Katalysators eingesetzt werden, eine oder mehrere Verbindung(en) ausgewählt aus der Gruppe bestehend aus aliphatischen Lactonen, aromatischen Lactonen, Lactiden, cyclischen Carbonaten mit mindestens drei gegebenenfalls substituierten Methylengruppen zwischen den Sauerstoffatomen der Carbonatgruppe, aliphatischen cyclischen Anhydriden und aromatischen cyclischen Anhydriden. Ohne an eine Theorie gebunden zu sein, werden solche Suspensionsmittel im späteren Verlauf der Polymerisationsverlauf in Gegenwart eines Starters in die Polymerkette eingebaut. Dadurch entfallen nachgelagerte Reinigungsschritte.

Aliphatische oder aromatische Lactone sind cyclische Verbindungen enthaltend eine Esterbindung im Ring. Bevorzugte Verbindungen sind 4-gliedrige Ringlactone wie β-Propiolacton, β-Butyrolacton, β-Isovalerolacton, β-Caprolacton, β-Isocaprolacton, β-Methyl-β-valerolacton, 5-gliedrige Ringlactone, wie γ-Butyrolacton, γ-Valerolacton, 5-Methylfuran-2(3H)-on, 5-Methylidenedihydrofuran-2(3H)-on, 5-Hydroxyfuran-2(5H)-on, 2-Benzofuran-1(3H)-on und 6-Methy-2-benzofuran-1(3H)-on, 6-gliedrige Ringlactone, wie δ-Valerolacton, 1,4-Dioxan-2-on, Dihydrocumarin, 1H-Isochromen-1-on, 8H-pyrano[3,4-b]pyridine-8-on, 1,4-Dihydro-3H-isochromen-3-on, 7,8-Dihydro-5H-pyrano[4,3-b]pyridine-5-on, 4-Methyl-3,4-dihydro-1H-pyrano[3,4-b]pyridine-1-on, 6-Hydroxy-3,4-dihydro-1H-isochromen-1-on, 7-Hydroxy-3,4-dihydro-2H-chromen-2-on, 3-Ethyl-1H-isochromen-1-on, 3-(Hydroxymethyl)-1H-isochromen-1-on, 9-Hydroxy-1H,3H-benzo[de]isochromen-1-on, 6,7-Dimethoxy-1,4-dihydro-3H-isochromen-3-on und 3-Phenyl-3,4-dihydro-1H-isochromen-1-on, 7-gliedrige Ringlactone, wie ε-Caprolacton, 1,5-Dioxepan-2-on, 5-Methyloxepan-2-on, Oxepane-2,7-dion, thiepan-2-on, 5-Chlorooxepan-2-on, (4*S*)-4-(Propan-2-yl)oxepan-2-on, 7-Butyloxepan-2-on, 5-(4-Aminobuthyl)oxepan-2-on, 5-Phenyloxepan-2-on, 7-Hexyloxepan-2-on, (5*S*,7*S*)-5-Methyl-7-(propan-2-yl)oxepan-2-on, 4-Methyl-7-(propan-2-yl)oxepan-2-on, und höhergliedrige Ringlactone, wie (7*E*)-Oxacycloheptadec-7-en-2-on.

Lactide sind cyclische Verbindungen enthaltend zwei oder mehr Esterbindungen im Ring. Bevorzugte Verbindungen sind Glycolid (1,4-Dioxan-2,5-dion), L-Lactid (L-3,6-Dimethyl-1,4-dioxan-2,5-dion), D-Lactid, DL-Lactid, Mesolactid und 3-Methyl-1,4-dioxan-2,5-dion, 3-Hexyl-6-methyl-1,4-dioxane-2,5-dione, 3,6-Di(but-3-en-1-yl)-1,4-dioxane-2,5-dion (jeweils einschließlich optisch aktiver Formen). Besonders bevorzugt ist L-Lactid.

Als cyclische Carbonate werden vorzugsweise Verbindungen mit mindestens drei gegebenenfalls substituierten Methylengruppen zwischen den Sauerstoffatomen der Carbonatgruppe eingesetzt. Bevorzugte Verbindungen sind Trimethylencarbonat, Neopentylglykolcarbonat (5,5-Dimethyl-1,3-dioxan-2-on), 2,2,4-Trimethyl-1,3-pentandiolcarbonat, 2,2-Dimethyl-1,3-butandiolcarbonat, 1,3-Butandiolcarbonat, 2-Methyl-1,3-propandiolcarbonat, 2,4-Pentandiolcarbonat, 2-Methyl-butan-1,3-diolcarbonat, TMP-Monoallylethercarbonat, Pentaerythritdiallylethercarbonat, 5-(2-Hydroxyethyl)-1,3-dioxan-2-on, 5-[2-(Benzyloxy)ethyl]-1,3-dioxan-2-on, 4-Ethyl-1,3-dioxolan-2-on, 1,3-Dioxolan-2-on, 5-Ethyl-5-methyl-1,3-dioxan-2-on, 5,5-Diethyl-1,3-dioxan-2-on, 5-Methyl-5-propyl-1,3-dioxan-2-on, 5-(Phenylamino)-1,3-dioxan-2-on und 5,5-Dipropyl-1,3-dioxan-2-on. Besonders bevorzugt sind Trimethylencarbonat und Neopentylglykolcarbonat.

Cyclische Carbonate mit weniger als drei gegebenenfalls substituierten Methylengruppen zwischen den Sauerstoffatomen der Carbonatgruppe werden unter den Bedingungen des erfindungsgemäßen Verfahrens zur Copolymerisation von Alkylenoxiden und CO₂ nicht oder nur zu einem geringen Anteil in die Polymerkette eingebaut.

Cyclische Carbonate mit weniger als drei gegebenenfalls substituierten Methylengruppen zwischen den Sauerstoffatomen der Carbonatgruppe können jedoch gemeinsam mit anderen Suspensionsmitteln eingesetzt werden. Bevorzugte cyclische Carbonate mit weniger als drei gegebenenfalls substituierten Methylengruppen zwischen den Sauerstoffatomen der Carbonatgruppe sind Ethylencarbonat, Propylencarbonat, 2,3-Butandiolcarbonat, 2,3-Pentandiolcarbonat, 2-Methyl-1,2-propandiolcarbonat, 2,3-Dimethyl-2,3-butandiolcarbonat.

Cyclische Anhydride sind cyclische Verbindungen enthaltend eine Anhydridgruppe im Ring. Bevorzugte Verbindungen sind Succinsäureanhydrid, Maleinsäureanhydrid, Phthalsäureanhydrid, 1,2-Cyclohexandicarbonsäureanhydrid, Diphensäureanhydrid, Tetrahydrophthalsäureanhydrid, Methyltetrahydrophthalsäureanhydrid, Norbornendisäureanhydrid und ihre Chlorierungsprodukte, Bernsteinsäureanhydrid, Glutarsäureanhydrid, Diglykolsäureanhydrid, 1,8-Naphthalsäureanhydrid, Bernsteinsäureanhydrid, Dodecenylbernsteinsäureanhydrid, Tetradecenylbernsteinsäureanhydrid, Hexadecenylbernsteinsäureanhydrid, Octadecenylbernsteinsäureanhydrid, 3- und 4-Nitrophthalsäureanhydrid, Tetrachlorphthalsäureanhydrid, Tetrabromphthalsäureanhydrid, Itaconsäureanhydrid, Dimethylmaleinsäureanhydrid, Allylnorbornendisäureanhydrid, 3-Methylfuran-2,5-dion, 3-Methyldihydrofuran-2,5-dion, Dihydro-2H-pyran-2,6(3H)-dion, 1,4-Dioxane-2,6-dion, 2H-Pyran-2,4,6(3H,5H)-trion, 3-Ethyldihydrofuran-2,5-dion, 3-Methoxydihydrofuran-2,5-dion, 3-(Prop-2-en-1-yl)dihydrofuran-2,5-dion, N-(2,5-Dioxotetrahydrofuran-3-yl)formamid und 3[(2E)-But-2-en-1-yl]dihydrofuran-2,5-dion. Besonders bevorzugt sind Succinsäureanhydrid, Maleinsäureanhydrid und Phthalsäureanhydrid.

Als Katalysator für die Herstellung der erfindungsgemäßen Polyoxyalkylenpolyole mit Mehrfachbindungen wird bevorzugt ein DMC-Katalysator (Doppel-Metall-Cyanid-Katalysator) eingesetzt. Es können zusätzlich oder als alleinige Katalysatoren auch andere Katalysatoren für die Copolymerisation von Alkylenoxiden und CO₂ aktiven Katalysatoren, wie beispielsweise Zink-Carboxylate oder Kobalt-Salen-Komplexe eingesetzt werden. Geeignete Zink-Carboxylate sind beispielsweise Zinksalze von Carbonsäuren, insbesondere Dicarbonsäuren, wie Adipinsäure oder Glutarsäure. Eine Übersicht über die bekannten Katalysatoren für die Copolymerisation von Alkylenoxiden und CO₂ gibt zum Beispiel Chemical Communications 47 (2011) 141-163.

Die in dem erfindungsgemäßen Verfahren einsetzbaren DMC-Katalysatoren enthaltenen Doppelmetallcyanid-Verbindungen sind die Reaktionsprodukte wasserlöslicher Metallsalze und wasserlöslicher Metallcyanidsalze.

Der Begriff Terpolymerisation im Sinne der Erfindung beinhaltet die Polymerisation von mindestens einem Alkylenoxid, mindestens einem Comonomeren mit einer Mehrfachbindung (Alkylenoxid und/oder cyclisches Anhydrid) und CO₂. Terpolymerisation im Sinne der Erfindung schließt insbesondere auch die Copolymerisation von gesamt mehr als drei Monomeren mit ein.

Eine Ausführungsform des erfindungsgemäß einsetzbaren Verfahrens zur Herstellung von Mehrfachbindungen enthaltenden Polyoxyalkylenpolyolen ist dadurch gekennzeichnet, dass
(α) [erste Aktivierungsstufe] ein Suspensionsmittel, das keine H-funktionellen Gruppen enthält, eine H-funktionelle Startersubstanz, ein Gemisch aus einem Suspensionsmittel, das keine H-funktionellen Gruppen enthält und einer H-funktionellen Startersubstanz oder ein Gemisch aus mindestens zwei H-funktionellen Startersubstanzen vorgelegt und gegebenenfalls Wasser und/oder andere leicht flüchtige Verbindungen durch erhöhte Temperatur und/oder reduziertem Druck entfernt werden, wobei der DMC-Katalysator dem Suspensionsmittel, das keine H-funktionellen Gruppen enthält, der H-funktionellen Startersubstanz, dem Gemisch aus einem Suspensionsmittel, das keine H-funktionellen Gruppen enthält und der H-funktionellen Startersubstanz oder dem Gemisch aus mindestens zwei H-funktionellen Startersubstanzen vor oder nach der ersten Aktivierungsstufe zugesetzt wird,
(β) [zweite Aktivierungsstufe] eine Teilmenge (bezogen auf die Gesamtmenge der in den Schritten (β) und (γ) eingesetzten Menge an Alkylenoxiden) von einem oder mehreren Alkylenoxiden zu der aus Schritt (α) resultierenden Mischung zugesetzt wird, wobei die Zugabe einer Teilmenge an Alkylenoxid gegebenenfalls in Gegenwart von CO₂ und/oder Inertgas (wie beispielsweise Stickstoff oder Argon) erfolgen kann, und wobei der Schritt (β) auch mehrfach erfolgen kann,
(γ) [Polymerisationsstufe] ein oder mehrere Alkylenoxiden, mindestens einer ungesättigter Verbindung (Alkylenoxid und/oder cyclisches Anhydrid) und Kohlendioxid zu der aus Schritt (β) resultierenden Mischung fortwährend zudosiert werden, wobei die für die Terpolymerisation eingesetzten Alkylenoxide gleich oder von den bei Schritt (β) eingesetzten Alkylenoxiden verschieden sein können.

### Zu Schritt (α):

Die Zugabe der einzelnen Komponenten in Schritt (α) kann gleichzeitig oder nacheinander in beliebiger Reihenfolge erfolgen; bevorzugt wird in Schritt (α) zunächst der DMC-Katalysator vorgelegt und gleichzeitig oder anschließend das Suspensionsmittel, das keine H-funktionellen Gruppen enthält, die H-funktionelle Startersubstanz, das Gemisch aus einem Suspensionsmittel, das keine H-funktionellen Gruppen enthält und der H-funktionellen Startersubstanz oder das Gemisch aus mindestens zwei H-funktionellen Startersubstanzen zugesetzt.

Gegenstand einer bevorzugten Ausführungsform ist ein Verfahren, wobei in Schritt (α) [erste Aktivierungsstufe]
(α1) in einem Reaktor der DMC-Katalysator und ein Suspensionsmittel und/oder eine oder mehrere H-funktionelle Startersubstanzen vorgelegt werden,
(α2) durch den Reaktor bei einer Temperatur von 50 bis 200°C, bevorzugt von 80 bis 160°C, besonders bevorzugt von 125 bis 135°C ein Inertgas (beispielsweise Stickstoff oder ein Edelgas wie Argon), ein Inertgas-Kohlendioxid-Gemisch oder Kohlendioxid geleitet wird und gleichzeitig durch Entfernen des Inertgases oder Kohlendioxids (beispielsweise mit einer Pumpe) ein reduzierter Druck (absolut) von 10 mbar bis 800 mbar, bevorzugt von 40 mbar bis 200 mbar im Reaktor eingestellt wird.

Gegenstand einer weiteren bevorzugten Ausführungsform ist ein Verfahren, wobei in Schritt (α) [erste Aktivierungsstufe]
(α1) ein Suspensionsmittel, das keine H-funktionellen Gruppen enthält, eine H-funktionelle Startersubstanz, ein Gemisch aus einem Suspensionsmittel, das keine H-funktionellen Gruppen enthält und einer H-funktionellen Startersubstanz oder ein Gemisch aus mindestens zwei H-funktionellen Startersubstanzen, gegebenenfalls unter Inertgasatmosphäre, unter einer Atmosphäre aus Inertgas-Kohlendioxid-Gemisch oder unter einer reinen Kohlendioxid-Atmosphäre, besonders bevorzugt unter Inertgasatmosphäre vorgelegt wird und
(α2) in das resultierende Gemisch aus DMC-Katalysator und dem Suspensionsmittel, das keine H-funktionellen Gruppen enthält, der H-funktionellen Startersubstanz, dem Gemisch aus einem Suspensionsmittel, das keine H-funktionellen Gruppen enthält und der H-funktionellen Startersubstanz oder dem Gemisch aus mindestens zwei H-funktionellen Startersubstanzen bei einer Temperatur von 50 bis 200°C, bevorzugt von 80 bis 160°C, besonders bevorzugt von 125 bis 135°C ein Inertgas, ein Inertgas-Kohlendioxid-Gemisch oder Kohlendioxid, besonders bevorzugt Inertgas eingeleitet und gleichzeitig durch Entfernen des Inertgases oder Kohlendioxids (beispielsweise mit einer Pumpe) ein reduzierter Druck (absolut) von 10 mbar bis 800 mbar, bevorzugt von 40 mbar bis 200 mbar im Reaktor eingestellt wird,
wobei der Doppelmetallcyanid-Katalysator zu dem Suspensionsmittel, das keine H-funktionellen Gruppen enthält, der H-funktionellen Startersubstanz, dem Gemisch aus einem Suspensionsmittel, das keine H-funktionellen Gruppen enthält und der H-funktionellen Startersubstanz oder dem Gemisch aus mindestens zwei H-funktionellen Startersubstanzen in Schritt (α1) oder unmittelbar anschließend in Schritt (α2) zugesetzt werden kann.

Der DMC-Katalysator kann in fester Form oder in einem Suspensionsmittel und/oder einer H-funktionellen Startersubstanz suspendiert zugegeben werden. Wird der DMC-Katalysator als Suspension zugegeben, wird diese bevorzugt in Schritt (α1) dem Suspensionsmittel und/oder der einen oder mehreren H-funktionellen Startersubstanzen zugefügt.

### Zu Schritt (β):

Der Schritt (β) der zweiten Aktivierungsstufe kann in Gegenwart von CO₂ und/oder Inertgas erfolgen. Bevorzugt erfolgt Schritt (β) unter einer Atmosphäre aus einem Inertgas-Kohlendioxid-Gemisch (beispielsweise Stickstoff-Kohlendioxid oder Argon-Kohlendioxid) oder einer Kohlendioxid-Atmosphäre, besonders bevorzugt unter Kohlendioxid-Atmosphäre. Das Einstellen einer Inertgas-Kohlendioxid-Atmosphäre oder einer Kohlendioxid-Atmosphäre und die Dosierung eines oder mehrerer Alkylenoxide können prinzipiell in unterschiedlicher Weise erfolgen. Der Vordruck wird bevorzugt durch Einleiten von Kohlendioxid eingestellt, wobei der Druck (absolut) 10 mbar bis 100 bar, vorzugsweise 100 mbar bis 50 bar und besonders bevorzugt 500 mbar bis 50 bar beträgt. Der Start der Dosierung des Alkylenoxids kann bei einem beliebig zuvor gewählten Vordruck erfolgen. Als Gesamtdruck (absolut) der Atmosphäre wird in Schritt (β) vorzugsweise im Bereich von 10 mbar bis 100 bar, vorzugsweise 100 mbar bis 50 bar und weiterhin bevorzugt 500 mbar bis 50 bar eingestellt. Gegebenenfalls wird während oder nach der Dosierung des Alkylenoxids der Druck durch Einleiten weiteren Kohlendioxids nachgeregelt, wobei der Druck (absolut) 10 mbar bis 100 bar, vorzugsweise 100 mbar bis 50 bar und bevorzugt 500 mbar bis 50 bar beträgt.

In einer bevorzugten Ausführungsform beträgt die bei der Aktivierung in Schritt (β) eingesetzte Menge an einem oder mehreren Alkylenoxiden 0,1 bis 25,0 Gew.%, bevorzugt 1,0 bis 20,0 Gew.-%, besonders bevorzugt 2,0 bis 16,0 Gew.-%, bezogen auf die im Schritt (α) eingesetzte Menge an Suspensionsmittel und/oder H-funktioneller Startersubstanz. Das Alkylenoxid kann in einem Schritt oder schrittweise in mehreren Teilmengen zugegeben werden.

In einer besonders bevorzugten Ausführungsform der Erfindung wird bei der Aktivierung in Schritt (β) [zweite Aktivierungsstufe] eine Teilmenge (bezogen auf die Gesamtmenge der in den Schritten (β) und (γ) eingesetzten Menge an Alkylenoxiden) von einem oder mehreren Alkylenoxiden zu der aus Schritt (α) resultierenden Mischung zugesetzt, wobei die Zugabe einer Teilmenge an Alkylenoxid gegebenenfalls in Gegenwart von CO₂ und/oder Inertgas erfolgen kann. Der Schritt (β) kann auch mehrfach erfolgen. Der DMC-Katalysator wird vorzugsweise in einer Menge eingesetzt, so dass der Gehalt an DMC-Katalysator im resultierenden Mehrfachbindungen enthaltenden Polyoxyalkylenpolyol 10 bis 10000 ppm, besonders bevorzugt 20 bis 5000 ppm und höchst bevorzugt 50 bis 500 ppm beträgt.

Im zweiten Aktivierungsschritt kann das Alkylenoxid beispielsweise in einer Portion oder innerhalb von 1 bis 15 Minuten, vorzugsweise 5 bis 10 Minuten zugegeben. Die Dauer des zweiten Aktivierungsschritts beträgt bevorzugt 15 bis 240 Minuten, besonders bevorzugt 20 bis 60 Minuten.

### Zu Schritt (γ):

Die Dosierung des oder der Alkylenoxide, der ungesättigten Verbindungen, im Folgenden auch als Monomere bezeichnet, und des Kohlendioxids kann simultan, wechselweise oder sequentiell erfolgen, wobei die gesamte Kohlendioxidmenge auf einmal oder über die Reaktionszeit dosiert zugegeben werden kann. Es ist möglich, während der Zugabe der Monomere den CO₂-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung der Monomere kann simultan, wechselweise oder sequentiell zur Kohlendioxid-Dosierung erfolgen. Es ist möglich, die Monomere mit einer konstanten Dosierrate zu dosieren oder die Dosierrate kontinuierlich oder schrittweise zu steigern oder zu senken oder die Monomere portionsweise zuzugeben. Bevorzugt werden die Monomere mit konstanter Dosierrate dem Reaktionsgemisch zugegeben. Werden mehrere Alkylenoxide zur Synthese der Mehrfachbindungen enthaltenden Polyoxyalkylenpolyole eingesetzt, so können die Alkylenoxide einzeln oder als Gemisch zudosiert werden. Die Dosierung der Alkylenoxide kann simultan, wechselweise oder sequentiell über jeweils separate Dosierungen (Zugaben) erfolgen oder über eine oder mehrere Dosierungen, wobei die Alkylenoxide einzeln oder als Gemisch dosiert werden können. Über die Art und/oder Reihenfolge der Dosierung der Monomere und/oder des Kohlendioxids ist es möglich, statistische, alternierende, blockartige oder gradientenartige Mehrfachbindungen enthaltende Polyoxyalkylenpolyole zu synthetisieren.

Vorzugsweise wird ein Überschuss an Kohlendioxid bezogen auf die berechnete Menge an benötigtem Kohlendioxid im Mehrfachbindungen enthaltenden Polyoxyalkylenpolyol eingesetzt, da bedingt durch die Reaktionsträgheit von Kohlendioxid ein Überschuss von Kohlendioxid von Vorteil ist. Die Menge an Kohlendioxid kann über den Gesamtdruck festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Mehrfachbindungen enthaltenden Polyoxyalkylenpolyole als vorteilhaft erwiesen. Es ist möglich, das Kohlendioxid dem Reaktionsbehälter kontinuierlich oder diskontinuierlich zuzuführen. Dies hängt davon ab, wie schnell die Monomere und das CO₂ verbraucht werden und ob das Produkt gegebenenfalls CO₂-freie Polyether-Blöcke oder Blöcke mit unterschiedlichem CO₂-Gehalt enthalten soll. Die Konzentration des Kohlendioxids kann bei der Zugabe der Monomere ebenso variieren. Je nach gewählten Reaktionsbedingungen ist es möglich, das CO₂ im gasförmigen, flüssigen oder überkritischen Zustand in den Reaktor einzuleiten. CO₂ kann auch als Feststoff in den Reaktor gegeben werden und dann unter den gewählten Reaktionsbedingungen in den gasförmigen, gelösten, flüssigen und/oder überkritischen Zustand übergehen.

In Schritt (γ) kann das Kohlendioxid beispielsweise in die Mischung eingeleitet werden durch
(i) Begasung des Reaktionsgemisches im Reaktor von unten,
(ii) Verwendung eines Hohlwellenrührers,
(iii) eine Kombination aus den Dosierungen gemäß (i) und (ii), und/oder
(iv) Begasung über die Flüssigkeitsoberfläche durch Einsatz mehrstufiger ausgeführter Rührorgane.
Schritt (γ) wird beispielsweise bei Temperaturen von 60 bis 150°C, vorzugsweise von 80 bis 120°C, ganz besonders bevorzugt von 90 bis 110°C durchgeführt. Werden Temperaturen unterhalb von 60°C eingestellt, kommt die Reaktion zum Erliegen. Bei Temperaturen oberhalb von 150°C steigt die Menge an unerwünschten Nebenprodukten stark an.

Die Begasung des Reaktionsgemisches im Reaktor gemäß (i) erfolgt bevorzugt über einen Begasungsring, eine Begasungsdüse oder über ein Gaseinleitungsrohr. Bei dem Begasungsring handelt es sich vorzugsweise um eine ringförmige Anordnung oder um zwei oder mehrere ringförmige Anordnungen von Begasungsdüsen, die bevorzugt am Boden des Reaktors und/oder an der Seitenwand des Reaktors angeordnet sind.

Der Hohlwellenrührer gemäß (ii) ist bevorzugt ein Rührer, bei dem das Gas über eine hohle Welle des Rührers in die Reaktionsmischung eingeleitet wird. Durch die Drehung des Rührers in der Reaktionsmischung (d.h. beim Mischen) entsteht an dem mit der Hohlwelle verbundenen Ende des Rührflügels ein Unterdruck derart, dass die Gasphase (enthaltend CO₂ und ggf. unverbrauchte Monomere) aus dem über der Reaktionsmischung befindlichen Gasraum abgesaugt und über die Hohlwelle des Rührers in die Reaktionsmischung geleitet wird.

Die Begasung des Reaktionsgemisches gemäß (i), (ii), (iii) oder (iv) kann jeweils mit frisch zudosiertem Kohlendioxid erfolgen und/oder mit einer Absaugung des Gases aus dem Gasraum über der Reaktionsmischung und anschließender Rekompression des Gases kombiniert werden. Beispielsweise wird das aus dem Gasraum über der Reaktionsmischung abgesaugte und komprimierte Gas, gegebenenfalls gemischt mit frischem Kohlendioxid und/oder Monomeren, wieder in das Reaktionsgemisches gemäß (i), (ii), (iii) und/oder (iv) eingeleitet.

Bevorzugt wird der Druckabfall, welcher über Einbau des Kohlendioxids, der Monomere bei der Terpolymerisation in das Reaktionsprodukt entsteht, über frisch zudosiertes Kohlendioxid ausgeglichen.

Die Einleitung der Monomere kann separat oder zusammen mit dem CO₂ sowohl über die Flüssigkeitsoberfläche oder direkt in die flüssige Phase erfolgen. Bevorzugt erfolgt die Einleitung der Monomere direkt in die flüssige Phase, da dies den Vorteil hat, dass eine rasche Durchmischung der eingebrachten Monomere mit der flüssigen Phase erfolgt und so lokale Konzentrationsspitzen der Monomere vermieden werden. Die Einleitung in die flüssige Phase kann über ein oder mehrere Einleitungsrohre, eine oder mehrere Düsen oder eine oder mehrere ringförmige Anordnungen von Mehrfach-Dosierstellen erfolgen, die bevorzugt am Boden des Reaktors und/oder an der Seitenwand des Reaktors angeordnet sind.

Die drei Schritte (α), (β) und (γ) können in demselben Reaktor oder jeweils separat in unterschiedlichen Reaktoren durchgeführt werden. Besonders bevorzugte Reaktortypen sind Rührkessel, Rohrreaktor und Schlaufenreaktor. Werden die Reaktionsschritte (α), (β) und (γ) in unterschiedlichen Reaktoren durchgeführt, kann für jeden Schritt ein unterschiedlicher Reaktortyp verwenden werden.

Mehrfachbindungen enthaltende Polyoxyalkylenpolyole können in einem Rührkessel hergestellt werden, wobei der Rührkessel je nach Ausführungsform und Betriebsweise über den Reaktormantel, innen liegende und/oder in einem Umpumpkreislauf befindliche Kühlflächen gekühlt wird. Sowohl in der semi-batch Anwendung, bei der das Produkt erst nach Ende der Reaktion entnommen wird, als auch in der kontinuierlichen Anwendung, bei der das Produkt kontinuierlich entnommen wird, ist besonders auf die Dosiergeschwindigkeit der Monomere zu achten. Sie ist so einzustellen, dass trotz der inhibierenden Wirkung des Kohlendioxids die Monomere genügend schnell abreagieren. Die Konzentration an freien Monomeren in der Reaktionsmischung während der zweiten Aktivierungsstufe (Schritt β) beträgt vorzugsweise > 0 bis 100 Gew.%, besonders bevorzugt > 0 bis 50 Gew.%, höchst bevorzugt > 0 bis 20 Gew.-% (jeweils bezogen auf das Gewicht der Reaktionsmischung). Die Konzentration an freien Monomeren in der Reaktionsmischung während der Reaktion (Schritt γ) beträgt vorzugsweise > 0 bis 40 Gew.%, besonders bevorzugt > 0 bis 25 Gew.%, höchst bevorzugt > 0 bis 15 Gew.% (jeweils bezogen auf das Gewicht der Reaktionsmischung).

Eine weitere mögliche Ausführungsform für die Copolymerisation (Schritt γ) ist dadurch gekennzeichnet, dass auch eine oder mehrere H-funktionelle Startersubstanzen während der Reaktion kontinuierlich in den Reaktor zudosiert werden. Bei einer Durchführung des Verfahrens im semi-batch Betrieb beträgt die Menge der H-funktionellen Startersubstanzen, die während der Reaktion kontinuierlich in den Reaktor zudosiert werden, bevorzugt mindestens 20 mol% Äquivalente, besonders bevorzugt 70 bis 95 mol% Äquivalente (jeweils bezogen auf die gesamte Menge an H-funktionellen Startersubstanzen). Bei einer kontinuierlichen Durchführung des Verfahrens beträgt die Menge der H-funktionellen Startersubstanzen, die während der Reaktion kontinuierlich in den Reaktor zudosiert werden, bevorzugt mindestens 80 mol% Äquivalente, besonders bevorzugt 95 bis 99,99 mol% Äquivalente (jeweils bezogen auf die gesamte Menge an H-funktionellen Startersubstanzen).

In einer bevorzugten Ausführungsform wird die gemäß den Schritten (α) und (β) aktivierte Katalysator-Starter-Mischung in demselben Reaktor weiter mit den Monomeren und Kohlendioxid umgesetzt. In einer weiteren bevorzugten Ausführungsform wird die gemäß den Schritten (α) und (β) aktivierte Katalysator-Starter-Mischung in einem anderen Reaktionsbehältnis (beispielsweise einem Rührkessel, Rohrreaktor oder Schlaufenreaktor) weiter mit den Monomeren und Kohlendioxid umgesetzt. In einer weiteren bevorzugten Ausführungsform wird die gemäß dem Schritt (α) vorbereitete Katalysator-Starter-Mischung in einem anderen Reaktionsbehältnis (beispielsweise einem Rührkessel, Rohrreaktor oder Schlaufenreaktor) gemäß den Schritten (β) und (γ) mit den Monomeren und Kohlendioxid umgesetzt.

Bei Reaktionsführung in einem Rohrreaktor werden die gemäß Schritt (α) vorbereitete Katalysator-Starter-Mischung oder die gemäß der Schritte (α) und (β) aktivierte Katalysator-Starter-Mischung und gegebenenfalls weitere Starter sowie die Monomeren und Kohlendioxid kontinuierlich durch ein Rohr gepumpt. Bei Verwendung einer gemäß Schritt (α) vorbereiteten Katalysator-Starter-Mischung erfolgt die zweite Aktivierungsstufe gemäß Schritt (β) im ersten Teil des Rohrreaktors und die Terpolymerisation gemäß Schritt (γ) im zweiten Teil des Rohrreaktors. Die molaren Verhältnisse der Reaktionspartner variieren je nach gewünschtem Polymer.

In einer Verfahrensvariante wird Kohlendioxid in seiner flüssigen oder überkritischen Form zudosiert, um eine optimale Mischbarkeit der Komponenten zu ermöglichen. Das Kohlendioxid kann am Eingang des Reaktors und/oder über Dosierstellen, die entlang des Reaktors angeordnet sind, in dem Reaktor eingebracht werden. Eine Teilmenge der Monomere kann am Eingang des Reaktors eingebracht werden. Die Restmenge der Monomere wird bevorzugt über mehrere Dosierstellen, die entlang des Reaktors angeordnet sind, in den Reaktor eingebracht. Vorteilhafterweise werden Mischelemente, wie sie zum Beispiel von der Firma Ehrfeld Mikrotechnik BTS GmbH vertrieben werden, zur besseren Durchmischung der Reaktionspartner eingebaut oder Mischer-Wärmetauscherelemente, die gleichzeitig die Durchmischung und Wärmeabfuhr verbessern. Bevorzugt wird durch die Mischelemente zudosiertes CO₂ und die Monomere mit der Reaktionsmischung vermischt. In einer alternativen Ausführungsform werden verschiedene Volumenelemente der Reaktionsmischung miteinander vermischt.

Schlaufenreaktoren können ebenfalls zur Herstellung von Mehrfachbindungen enthaltenden Polyoxyalkylenpolyolen verwendet werden. Hierunter fallen im Allgemeinen Reaktoren mit interner und/oder externer Stoffrückführung (ggf. mit im Kreislauf angeordneten Wärmetauscherflächen), wie beispielsweise ein Strahlschlaufenreaktor, Jet-Loop Reaktor oder Venturi-Loop Reaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren oder mehreren hintereinander geschalteten Rührkesseln.

Um einen vollständigen Umsatz zu realisieren, kann dem Reaktionsapparat, in dem der Schritt (γ) durchgeführt wird, häufig ein weiterer Kessel oder ein Rohr ("Verweilrohr") nachgeschaltet sein, in dem nach der Reaktion vorhandene Restkonzentrationen freier Monomere abreagieren. Bevorzugt liegt der Druck in diesem nachgeschalteten Reaktor bei demselben Druck wie in dem Reaktionsapparat, in dem der Reaktionsschritt (γ) durchgeführt wird. Der Druck in dem nachgeschalteten Reaktor kann jedoch auch höher oder niedriger gewählt werden. In einer weiteren bevorzugten Ausführungsform wird das Kohlendioxid nach dem Reaktionsschritt (γ) ganz oder teilweise abgelassen und der nachgeschaltete Reaktor bei Normaldruck oder einem geringen Überdruck betrieben. Die Temperatur in dem nachgeschalteten Reaktor liegt bevorzugt bei 10 bis 150°C und besonders bevorzugt bei 20 bis 100°C. Das Reaktionsgemisch enthält am Ende der Nachreaktionszeit bzw. am Ausgang des nachgeschalteten Reaktors vorzugsweise weniger als 0,05 Gew.% an Monomeren. Die Nachreaktionszeit bzw. die Verweilzeit im nachgeschalteten Reaktor beträgt bevorzugt 10 min bis 24 h, besonders bevorzugt 10 min bis 3 h.

Die erhältlichen Mehrfachbindungen enthaltenden Polyoxyalkylenpolyole haben vorzugsweise eine OH-Funktionalität (d.h. durchschnittliche Anzahl von OH-Gruppen pro Molekül) von mindestens 0,8, bevorzugt von 1 bis 8, besonders bevorzugt von 1 bis 6 und ganz besonders bevorzugt von 2 bis 4. In einer alternativen Ausführungsform wird ein Teil der OH-Gruppen vor der Umsetzung der Polyoxyalkylenpolyole zu Organooxysilyl-Endgruppen enthaltenden Polymere mit geeigneten Reagenzien abgesättigt, so dass das entstehende Polyoxyalkylenpolyol eine OH-Funktionalität kleiner als 0,8, bevorzugt kleiner als 0,5 und besonders bevorzugt kleiner als 0,1 aufweist. Dies führt bei speziellen Anwendungen zu einer niedrigeren Polarität der Elastomer-Vorstufe, wodurch beispielsweise die Wasseraufnahme der Elastomere herabgesetzt wird. Geeignete Reagenzien für die Absättigung der OH-Funktionalitäten sind beispielsweise Methylierungsmittel.

Das Molekulargewicht der erhaltenen Mehrfachbindungen enthaltenden Polyoxyalkylenpolyole beträgt bevorzugt mindestens 400, besonders bevorzugt 400 bis 1000000 g/mol und höchst bevorzugt 500 bis 60000 g/mol.

Als geeignete H-funktionelle Startersubstanzen (Starter) können Verbindungen mit für die Alkoxylierung aktiven H-Atomen eingesetzt werden. Für die Alkoxylierung aktive Gruppen mit aktiven H-Atomen sind beispielsweise -OH, -NH₂ (primäre Amine), -NH- (sekundäre Amine), -SH und -CO₂H, bevorzugt sind -OH und -NH₂, besonders bevorzugt ist -OH. Als H-funktionelle Startersubstanz können beispielsweise eine oder mehrere Verbindungen ausgewählt werden aus der Gruppe umfassend ein- oder mehrwertige Alkohole, mehrwertige Amine, mehrwertige Thiole, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z.B. sogenannte Jeffamine® von Huntsman, wie z.B. D-230, D-400, D-2000, T-403, T-3000, T-5000 oder entsprechende Produkte der BASF, wie z.B. Polyetheramin D230, D400, D200, T403, T5000), Polytetrahydrofurane (z.B. PolyTHF® der BASF, wie z.B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C1-C24 Alkyl-Fettsäureester, die im Mittel mindestens 2 OH-Gruppen pro Molekül enthalten. Beispielhaft handelt es sich bei den C1-C23 Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Startersubstanzen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propargylalkohol, 2-Methyl-2-propanol, 1*-tert-*Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, *tert*-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvor genannten Alkohole mit unterschiedlichen Mengen an ε-Caprolacton.

Die H-funktionellen Startersubstanzen können auch aus der Substanzklasse der Polyetherpolyole ausgewählt sein, insbesondere solchen mit einem Molekulargewicht Mₙ im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®-Baygal®-, PET®- und Polyetherpolyole der Bayer MaterialScience AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Startersubstanzen können auch aus der Substanzklasse der Polyesterpolyole ausgewählt sein, insbesondere solchen mit einem Molekulargewicht Mₙ im Bereich von 200 bis 4500 g/mol. Als Polyesterpolyole können mindestens difunktionelle Polyester eingesetzt werden. Bevorzugt bestehen Polyesterpolyole aus alternierenden Säure- und Alkoholeinheiten. Als Säurekomponenten können z.B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydride eingesetzt werden. Als Alkoholkomponenten werden z.B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyoxyalkylenpolyole dienen können. Bevorzugt werden Polyetherpolyole mit Mₙ = 150 bis 2000 g/mol zur Herstellung der Polyesteretherpolyole eingesetzt.

Des Weiteren können als H-funktionelle Startersubstanzen Polycarbonatdiole eingesetzt werden, insbesondere solche mit einem Molekulargewicht Mₙ im Bereich von 150 bis 4500 g/mol, vorzugsweise 500 bis 2500 g/mol, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z.B. in der EP-A 1359177. Beispielsweise können als Polycarbonatdiole die Desmophen® C-Typen der Bayer MaterialScience AG verwendet werden, wie z.B. Desmophen® C 1100 oder Desmophen® C 2200.

In einer weiteren Ausführungsform der Erfindung können Polyethercarbonatpolyole (z.B. cardyon® Polyole der Fa. Covestro), Polycarbonatpolyole (z.B. Converge® Polyole der Fa. Novomer / Saudi Aramco, NEOSPOL Polyole der Fa. Repsol etc.) und/oder Polyetherestercarbonatpolyole als H-funktionelle Startersubstanz eingesetzt werden. Insbesondere können Polyethercarbonatpolyole, Polycarbonatpoylole und/oder Polyetherestercarbonatpolyole durch Umsetzung von Alkylenoxiden, bevorzugt Ethylenoxid, Propylenoxid oder deren Mischungen, optional weiteren Co-Monomeren mit CO₂ in Gegenwart einer weiteren H-funktionellen Starterverbindung und unter Verwendung von Katalysatoren erhalten werden. Diese Katalysatoren umfassen Doppelmetallcyanid-Katalysatoren (DMC-Katalysatoren) und/oder Metallkomplexkatalysatoren beispielsweise auf Basis der Metalle Zink und/oder Cobalt, wie beispielsweise Zink-Glutarat-Katalysatoren (beschrieben z.B. in M. H. Chisholm et al., Macromolecules 2002, 35, 6494), sogenannte Zink-Diiminat-Katalysatoren (beschrieben z.B. in S. D. Allen, J. Am. Chem. Soc. 2002, 124, 14284) und sogenannte Cobalt-Salen-Katalysatoren (beschrieben z.B. in US 7,304,172 B2, US 2012/0165549 A1) und/oder Mangan-Salen Komplexe. Eine Übersicht über die bekannten Katalysatoren für die Copolymerisation von Alkylenoxiden und CO₂ gibt zum Beispiel Chemical Communications 47(2011)141-163. Durch die Verwendung unterschiedlicher Katalysatorsysteme, Reaktionsbedingungen und/oder Reaktionssequenzen erfolgt hierbei die Bildung von statistischen, alternierenden, blockartigen oder gradientenartigen Polyethercarbonatpolyole, Polycarbonatpoylole und/oder Polyetherestercarbonatpolyole. Diese als H-funktionelle Starterverbindungen eingesetzten Polyethercarbonatpolyole, Polycarbonatpoylole und/oder Polyetherestercarbonatpolyole können hierzu in einem separaten Reaktionsschritt zuvor hergestellt werden.Die H-funktionellen Startersubstanzen weisen im Allgemeinen eine OH-Funktionalität (d.h. Anzahl an für die Polymerisation aktiven H-Atomen pro Molekül) von 1 bis 8, bevorzugt von 2 bis 6 und besonders bevorzugt von 2 bis 4 auf. Die H-funktionellen Startersubstanzen werden entweder einzeln oder als Gemisch aus mindestens zwei H-funktionellen Startersubstanzen eingesetzt.

Bevorzugte H-funktionelle Startersubstanzen sind Alkohole mit einer Zusammensetzung nach der allgemeinen Formel,

HO-(CH₂)ₓ-OH (II)

wobei x eine Zahl von 1 bis 20, bevorzugt eine ganze Zahl von 2 bis 20 ist. Beispiele für Alkohole gemäß Formel (II) sind Ethylenglycol, 1,4-Butandiol, 1,6-Hexandiol, 1,8-Octandiol, 1,10 Decandiol und 1,12-Dodecandiol. Weitere bevorzugte H-funktionelle Startersubstanzen sind Neopentylglykol, Trimethylolpropan, Glycerin, Pentaerythrit, Umsetzungsprodukte der Alkohole gemäß Formel (II) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Startersubstanzen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Startersubstanz und Propylenoxid bzw. einer di- oder tri-H-funktionellen Startersubstanz, Propylenoxid und Ethylenoxid aufgebaut ist. Die Polyetherpolyole haben bevorzugt eine OH-Funktionalität von 2 bis 4 und ein Molekulargewicht Mₙ im Bereich von 62 bis 4500 g/mol und insbesondere ein Molekulargewicht Mₙ im Bereich von 62 bis 3000 g/mol.

Doppelmetallcyanid (DMC)-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyoxyalkylenen bei sehr geringen Katalysatorkonzentrationen. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert-Butanol) noch einen Polyether mit einem zahlenmittleren Molekulargewicht größer als 500 g/mol enthalten.

Die erfindungsgemäß einsetzbaren DMC-Katalysatoren werden vorzugsweise erhalten, indem man
(1.) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,
(2.) wobei im zweiten Schritt der Feststoff aus der aus (a) erhaltenen Suspension durch bekannte Techniken (wie Zentrifugation oder Filtration) abgetrennt wird,
(3.) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),
(4.) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,
und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den erfindungsgemäß einsetzbaren DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise wird eine wässrige Zinkchlorid-Lösung (bevorzugt im Überschuss bezogen auf das Metallcyanidsalz) und Kaliumhexacyanocobaltat gemischt und anschließend Dimethoxyethan (Glyme) oder *tert*-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze weisen bevorzugt eine Zusammensetzung nach der allgemeinen Formel (III) auf,

M(X)ₙ (III),

wobei
M ausgewählt ist aus den Metallkationen Zn²⁺, Fe²⁺, Ni²⁺, Mn²⁺, Co²⁺, Sr²⁺, Sn²⁺, Pb²⁺ und, Cu²⁺, bevorzugt ist M Zn²⁺, Fe²⁺, Co²⁺ oder Ni²⁺,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat und
n ist 2, wenn X = Halogenid, Hydroxid, Carboxylat, Cyanat, Thiocyanat, Isocyanat, Isothiocyanat oder Nitrat,
oder geeignete Metallsalze weisen bevorzugt eine Zusammensetzung nach der allgemeinen Formel (IV) auf,

Mᵣ(X)₃ (IV),

wobei
M ausgewählt ist aus den Metallkationen Fe³⁺, Al³⁺, Co³⁺ und Cr³⁺,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanate Isocyanat, Isothiocyanat, Carboxylat, Oxalat und Nitrat;
r ist 2, wenn X = Sulfat, Carbonat oder Oxalat und
r ist 1, wenn X = Halogenid, Hydroxid, Carboxylat, Cyanat, Thiocyanat, Isocyanat, Isothiocyanat oder Nitrat,
oder geeignete Metallsalze weisen bevorzugt eine Zusammensetzung nach der allgemeinen Formel (V) auf,

M(X)_{S} (V),

wobei
M ausgewählt ist aus den Metallkationen Mo⁴⁺, V⁴⁺ und W⁴⁺,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat und
s ist 4, wenn X = Halogenid, Hydroxid, Carboxylat, Cyanat, Thiocyanat, Isocyanat, Isothiocyanat oder Nitrat,
oder geeignete Metallsalze weisen bevorzugt eine Zusammensetzung nach der allgemeinen Formel (VI) auf,

M(X)ₜ (VI),

wobei
M ausgewählt ist aus den Metallkationen Mo⁶⁺ und W⁶⁺,
X umfasst ein oder mehrere (d.h. verschiedene) Anionen, vorzugsweise Anionen ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat und
t ist 6, wenn X = Halogenid, Hydroxid, Carboxylat, Cyanat, Thiocyanat, Isocyanat, Isothiocyanat oder Nitrat.

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze weisen bevorzugt eine Zusammensetzung nach der allgemeinen Formel (VII) auf

(Y)ₐM'(CN)_{b}(A)_{c} (VII),

wobei
M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. Li⁺, Na⁺, K⁺, Rb⁺)und Erdalkalimetall (d.h. Be²⁺, Mg²⁺, Ca²⁺, Sr²⁺, Ba²⁺),
A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calcium-hexacyanocobaltat(III) und Lithiumhexacyanocobaltat(III).

Bevorzugte Doppelmetallcyanid-Verbindungen, die in den erfindungsgemäß einsetzbaren DMC-Katalysatoren enthalten sind, sind Verbindungen mit Zusammensetzungen nach der allgemeinen Formel (VIII)

Mₓ[M'ₓ,(CN)_{y}]_{z} (VIII),

worin M wie in den Formeln (III) bis (VI) und
M' wie in Formel (VII) definiert ist, und
x, x', y und z ganzzahlig sind und so gewählt, dass die Elektronenneutralität der Doppelmetallcyanidverbindung gegeben ist.

Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zink-hexacyanoiridat(III), Zinkhexacyanoferrat(III) und Kobalt(II)hexacyanokobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt kann Zinkhexacyanokobaltat(III) verwendet werden.

Die bei der Herstellung der DMC-Katalysatoren zusetzbaren organischen Komplexliganden sind beispielsweise in US-A 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert-butylether, Diethylenglykol-mono-tert-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert-butylether und 3-Methyl-3-oxetan-methanol.

Optional werden in der Herstellung der erfindungsgemäß einsetzbaren DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, α,β-ungesättigten Carbonsäureester oder ionische oberflächen- bzw. grenzflächenaktiven Verbindungen eingesetzt.

Bevorzugt werden bei der Herstellung der erfindungsgemäß einsetzbaren DMC-Katalysatoren die wässrigen Lösungen des Metallsalzes (z.B. Zinkchlorid) im ersten Schritt im stöchiometrischen Überschuss (mindestens 50 Mol-%) bezogen auf das Metallcyanidsalz eingesetzt. Dies entspricht mindestens einem molaren Verhältnis von Metallsalz zu Metallcyanidsalz von 2,25 zu 1,00. Das Metallcyanidsalz (z.B. Kaliumhexacyanokobaltat) wird in Gegenwart des organischen Komplexliganden (z.B. tert-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators, wie beispielsweise in WO-A 01/39883 beschrieben.

Im zweiten Schritt kann die Isolierung des Feststoffs (d.h. die Vorstufe des Katalysators) aus der Suspension durch bekannte Techniken, wie Zentrifugation oder Filtration, erfolgen.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäß einsetzbaren Katalysator entfernt werden. Bevorzugt liegt die Menge des organischen Komplexliganden in der wässrigen Waschlösung zwischen 40 und 80 Gew.%, bezogen auf die Gesamtlösung.

Optional wird im dritten Schritt der wässrigen Waschlösung eine weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Vorzugsweise wird in einem ersten Waschschritt (3.-1) mit einer wässrigen Lösung des ungesättigten Alkohols gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäß einsetzbaren Katalysator zu entfernen. Besonders bevorzugt liegt die Menge des ungesättigten Alkohols in der wässrigen Waschlösung zwischen 40 und 80 Gew.%, bezogen auf die Gesamtlösung des ersten Waschschritts. In den weiteren Waschschritten (3.-2) wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus ungesättigtem Alkohol und weiterer komplexbildender Komponente (bevorzugt im Bereich zwischen 0,5 und 5 Gew.%, bezogen auf die Gesamtmenge der Waschlösung des Schrittes (3.-2)), als Waschlösung eingesetzt und der Feststoff damit einmal oder mehrmals, vorzugsweise einmal bis dreimal gewaschen.

Der isolierte und gegebenenfalls gewaschene Feststoff kann anschließend, gegebenenfalls nach Pulverisierung, bei Temperaturen von 20 - 100°C und bei Drücken von 0,1 mbar bis Normaldruck (1013 mbar) getrocknet werden.

Ein bevorzugtes Verfahren zur Isolierung der erfindungsgemäß einsetzbaren DMC-Katalysatoren aus der Suspension durch Filtration, Filterkuchenwäsche und Trocknung wird in WO-A 01/80994 beschrieben.

Die ungesättigten Comonomere können statistisch oder blockweise in den Mehrfachbindungen enthaltenden Polyoxyalkylenpolyolen verteilt sein. Auch Gradientenpolymere sind einsetzbar.

In einer weiteren Ausgestaltung des Verfahren können die in Schritt (γ) zudosierten ungesättigten, cyclischen Anhydride aus der Gruppe umfassend 4-Cyclohexen-1,2-disäureanhydrid, 4-Methyl-4-cyclohexen-1,2-disäureanhydrid, 5,6-Norbornen-2,3-disäureanhydrid, Allyl-5,6-norbornen-2,3-disäureanhydrid, Dodecenylbernsteinsäureanhydrid, Tetradecenylbernsteinsäureanhydrid, Hexadecenylbernsteinsäureanhydrid oder Octadecenylbernsteinsäureanhydrid ausgewählt sein.

Es ist ferner bevorzugt, dass das mindestens eine Kohlenstoff-Kohlenstoff mehrfachbindungshaltige Monomer ausgewählt ist aus mindestens einem der Monomere aus einer oder mehrerer der Gruppen bestehend aus
(a) Allylglycidylether, Vinylcyclohexenoxid, Cyclooctadienmonoepoxid, Cyclododecatrienmonoepoxid, Butadienmonoepoxid, Isoprenmonoepoxid, Limonenoxid, 1,4-Divinylbenzolmonoepoxid, 1,3-Divinylbenzolmonoepoxid, Glycidylester ungesättigter Fettsäuren, teilweise epoxidierte Fette und Öle und/oder deren Mischungen
(b) Alkylenoxid mit Doppelbindung der allgemeinen Formel (IX) ist: 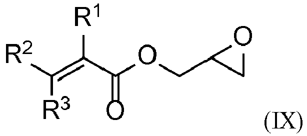 wobei R₁ bis R₃ unabhängig voneinander H, Halogen, substituierte oder nicht-substituierte C1-C22-Alkyl, substituierte oder nicht-substituierte C6-C12 Aryl sind
(c) cyclisches Anhydrid der Formel (X), (XI) oder (XII) entspricht: 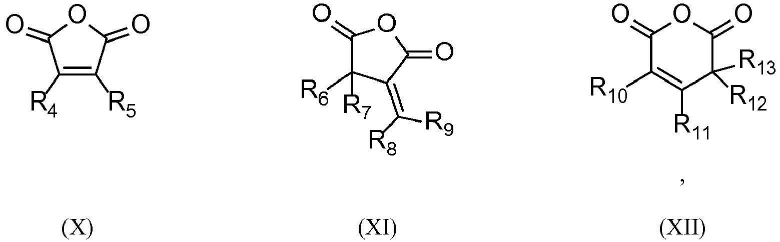 wobei R₁ bis R₁₀ unabhängig voneinander H, Halogen, substituierte oder nicht-substituierte C1-C22-Alkyl, substituierte oder nicht-substituierte C6-C12 Aryl sind,
(d) 4-Cyclohexen-1,2-disäureanhydrid, 4-Methyl-4-cyclohexen-1,2-disäureanhydrid, 5,6-Norbornen-2,3-disäureanhydrid, Allyl-5,6-norbornen-2,3-disäureanhydrid, Dodecenylbernsteinsäureanhydrid, Tetradecenylbernsteinsäureanhydrid, Hexadecenylbernsteinsäureanhydrid und Octadecenylbernsteinsäureanhydrid
   und
(e) Alkylenoxid mit Dreifachbindung der allgemeinen Formel (XIII) ist: 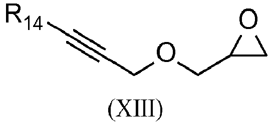 R14 steht unabhängig voneinander für gesättigtes oder ungesättigtes C1-C22-Alkyl, C6-C14-Aryl, C7-C14-Aralkyl, C7-C14- Alkylaryl.

Besonders bevorzugt wird das mindestens eine Kohlenstoff-Kohlenstoff mehrfachbindungshaltige Monomer ausgewählt wird aus einer oder mehrerer der Gruppen bestehend aus
(a) Allylglycidylether, Vinylcyclohexenoxid und Limonenoxid
(b) Glycidylacrylat und Glycidylmethacrylat,
(c) Maleinsäureanhydrid und Itaconsäureanhydrid, cis-1,2,3,6-Tetrahydrophthalic anhydride
(d) 4-Cyclohexen-1,2-disäureanhydrid und 5,6-Norbornen-2,3-disäureanhydrid und
(e) Glycidylpropargylether.
Es ist ferner bevorzugt, dass das Kohlenstoff-Kohlenstoff Mehrfachbindungen enthaltende Polyethercarbonatpolyol einen CO2 Anteil von 3 Gew.-% bis 44 Gew.-% bevorzugt von 5 Gew.-% bis 25 Gew.-% aufweist.

Ganz besonders bevorzugt können Maleinsäureanhydrid, Itaconsäureanhydrid eingesetzt und cis-1,2,3,6-Tetrahydrophthalic anhydrid werden.

Vorzugsweise umfasst das Alkylenoxid (=Epoxid) Ethylenoxid, Propylenoxid und/oder Styroloxid besonder bevorzugt Ethylenoxid und/oder Propylenoxid.

Hinsichtlich der H-funktionellen Startersubstanz ist bevorzugt, dass als H-funktionelle Startersubstanz ein Polyol eingesetzt wird. Vorzugsweise wird in dieser Reaktion ein Kohlenstoff-Kohlenstoff -Doppelbindungen enthaltendes Polyoxyalkylenpolyol, besonders bevorzugt ein Kohlenstoff-Kohlenstoff mehrfachbindungshaltige enthaltendes Polyethercarbonatpolyol eingesetzt.

In einer weiteren Charakteristik des Verfahrens können die in Schritt (γ) zudosierten Alkylenoxide mit Mehrfachbindung aus der Gruppe umfassend Allylglycidylether, Vinylcyclohexenoxid, Cyclooctadienmonoepoxid, Cyclododecatrienmonoepoxid, Butadienmonoepoxid, Isoprenmonoepoxid und/oder Limonenoxid ausgewählt sein.

In einer weiteren Ausgestaltung des erfindungsgemäßen Verfahrens kann das Mehrfachbindungen enthaltende Polyoxyalkylenpolyol einen Anteil an ungesättigten Comonomeren von größer oder gleich 0,1 mol-% und kleiner oder gleich 50 mol-% aufweisen. Im Zuge der weiteren Funktionalisierung der erfindungsgemäß eingesetzten Mehrfachbindungen enthaltenden Polyoxyalkylenpolyole hat sich die Bereitstellung einer definierten Anzahl an Funktionalisierungsmöglichkeiten, welche im oben angegebenen Bereich liegt, als besonders vorteilhaft erwiesen. Dies bedeutet, dass in dem erfindungsgemäß eingesetzten Polyoxyalkylenpolyol in etwa jede 2te bis jede 1000te Monomereinheit innerhalb der Polymerkette eine ungesättigte Gruppe trägt und demzufolge im Zuge einer weiteren Umsetzung mit Radikalen reagieren kann. Der Anteil an ungesättigten Comonomeren in den zu Polyoxyalkylenpolyolen kann des Weiteren vorzugsweise größer oder gleich 0,5 Mol-% und kleiner oder gleich 15 Mol-% betragen, insbesondere größer oder gleich 1,0 Mol-% und kleiner oder gleich 10 Mol-% betragen.

Im erfindungsgemäßen Verfahren betreffend Schritt A) wird in einer weiteren Ausführungsform als Organooxysilylverbindung mindestens einer Verbindung ausgewählt wird aus einer oder mehrerer der Gruppen bestehend aus Trimethoxysilan, Methyltrimethoxysilan, Phenyltrimethoxysilan, Triethoxysilan, Methyltriethoxysilan, Methyltripropoxysilan, Hexadecyltrimethoxysilan, Octodecyltrimethoxysilan, n-Octyltrimethoxysilan, n-Octyltriethoxysilan, Propyltrimethoxysilan, Propyltriethoxysilan, N-Butyltrimethoxysilan, n-Butyltriethoxysilan, iso-Butyltriethoxysilan, 3-Chloropropyltrimethoxysilan, 3-Chloropropyltriethoxysilan, 3-Chloropropylmethyldiethoxysilan, Chloromethyltrimethoxysilan, Chloromethyltriethoxysilan, Dichloromethyltriethoxysilan Tetramethoxysilan, Tetraethoxysilan und Tetraisopropoxysilan.

In einer bevorzugten Ausführungsform ist die Organooxysilylverbindung mindestens eine Verbindung ausgewählt wird aus der Gruppen bestehend aus Trimethoxysilan, Triethoxysilan Tetramethoxysilan, Tetraethoxysilan und Tetraisopropoxysilan.

Vorzugsweise wird diese Verbindung im Überschuss eingesetzt, beispielsweise in einem Molverhältnis von ≥10:1 bis ≤ 50:1 bezogen auf die OH-Gruppen im Polyol.

In einer Ausführungsform des erfindungsgemäßen Verfahren ist der in Schritt A) eingesetzte Katalysator (A) ausgewählt aus der Gruppe bestehend aus:
(a) Amine der allgemeinen Formel (XIV): 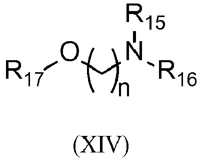 wobei gilt:
   R15 und R16 sind unabhängig voneinander Wasserstoff, Alkyl oder Aryl; oder
   R15 und R16 bilden gemeinsam mit dem sie tragenden N-Atom einen aliphatischen, ungesättigten oder aromatischen Heterozyklus;
   n ist eine ganze Zahl von 1 bis 10;
   R17 ist Wasserstoff, Alkyl oder Aryl; oder
   R17 steht für -(CH2)x-N(R18)(R19), wobei gilt:
      R18 und R19 sind unabhängig voneinander Wasserstoff, Alkyl oder Aryl; oder
      R18 und R19 bilden gemeinsam mit dem sie tragenden N-Atom einen aliphatischen, ungesättigten oder aromatischen Heterozyklus;
   x ist eine ganze Zahl von 1 bis 10;
(b) Amine der allgemeinen Formel (XV): 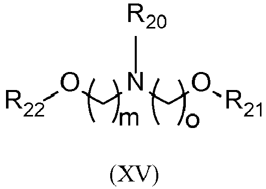 wobei gilt:
   R20 ist Wasserstoff, Alkyl oder Aryl;
   R21 und R22 sind unabhängig voneinander Wasserstoff, Alkyl oder Aryl;
   m und o sind unabhängig voneinander eine ganze Zahl von 1 bis 10;
   und/oder:
(c) Diazabicyclo[2.2.2]octan, Diazabicyclo[5.4.0]undec-7-en, Dialkylbenzylamin, Dimethylpiperazin, 2,2'-Dimorpholinyldiethylether, 4-Dimethylaminopyridin und Pyridin.

In einer bevorzugten Ausführungsform des erfindungsgemäßen Verfahren ist der in Schritt A) eingesetzte Katalysator (A) ausgewählt aus der Gruppe bestehend aus Diazabicyclo[2.2.2]octan, Diazabicyclo[5.4.0]undec-7-en und 4-Dimethylaminopyridin.

Die vorliegende Erfindung betrifft weiterhin ein Organooxysilyl-Endgruppen enthaltendes Polymer, erhältlich durch ein erfindungsgemäßes Verfahren. Vorzugsweise hat dieses Polymer ein zahlenmittleres Molekulargewicht Mₙ von ≥ 500 g/mol bis ≤ 100000 g/mol besonders bevorzugt ≥ 1000 g/mol bis ≤ 50000 g/mol und ganz besonders bevorzugt von insbesondere von ≥ 5000 g/mol bis ≤ 8000 g/mol. Das Zahlenmittel Mₙ und das Gewichtsmittel M_{w} des Molekulargewichts können mittels Gelpermeationschromatographie (GPC) bestimmt. Es wird nach DIN 55672-1: "Gelpermeationschromatographie, Teil 1 - Tetrahydrofuran als Elutionsmittel" vorgegangen (Beispiel: SECurity GPC-System von PSS Polymer Service, Flussrate 1.0 ml/min; Säulen: 2×PSS SDV linear M, 8×300 mm, 5 µm; RID-Detektor). Dabei werden Polystyrolproben bekannter Molmasse zur Kalibrierung verwendet.

Wie bereits vorstehend erwähnt ist ein weiterer Aspekt der vorliegenden Erfindung ein Verfahren zur Herstellung einer Elastomer-Vorstufe, wobei das Verfahren den Schritt umfasst:
B) Erhitzen eines Organooxysilyl-Endgruppen enthaltenden Polymers gemäß der vorliegenden Erfindung auf eine Temperatur von ≥ 65 °C in Gegenwart eines Katalysators.

Die Temperatur kann insbesondere ≥ 75 °C bis ≤ 180 °C und vorzugsweise ≥ 80 °C bis ≤ 130 °C betragen.

In einer Ausführungsform des erfindungsgemäßen Verfahren ist der in Schritt B) eingesetzte Katalysator (B) ausgewählt aus der Gruppe bestehend aus
(a) Amine der allgemeinen Formel (XIV): 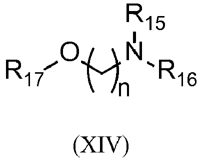 wobei gilt:
   R15 und R16 sind unabhängig voneinander Wasserstoff, Alkyl oder Aryl; oder
   R15 und R16 bilden gemeinsam mit dem sie tragenden N-Atom einen aliphatischen, ungesättigten oder aromatischen Heterozyklus;
   n ist eine ganze Zahl von 1 bis 10;
   R17 ist Wasserstoff, Alkyl oder Aryl; oder
   R17 steht für -(CH2)x-N(R18)(R19), wobei gilt:
      R18 und R19 sind unabhängig voneinander Wasserstoff, Alkyl oder Aryl; oder
      R18 und R19 bilden gemeinsam mit dem sie tragenden N-Atom einen aliphatischen, ungesättigten oder aromatischen Heterozyklus;
   x ist eine ganze Zahl von 1 bis 10;
(b) Amine der allgemeinen Formel (XV): 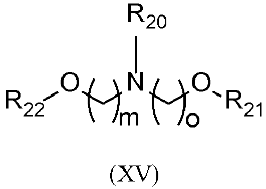 wobei gilt:
   R20 ist Wasserstoff, Alkyl oder Aryl;
   R21 und R22 sind unabhängig voneinander Wasserstoff, Alkyl oder Aryl;
   m und o sind unabhängig voneinander eine ganze Zahl von 1 bis 10;
   und/oder:
(c) Diazabicyclo[2.2.2]octan, Diazabicyclo[5.4.0]undec-7-en, Dialkylbenzylamin, Dimethylpiperazin, 2,2'-Dimorpholinyldiethylether, 4-Dimethylaminopyridin und Pyridin.

In einer bevorzugten Ausführungsform des erfindungsgemäßen Verfahren ist der in Schritt B) eingesetzte Katalysator (B) ausgewählt aus der Gruppe bestehend aus Diazabicyclo[2.2.2]octan, Diazabicyclo[5.4.0]undec-7-en und 4-Dimethylaminopyridin.

In einer Ausführungsform des erfindungsgemäßen Verfahrens ist der in Schritt A) eingesetzte Katalysator (A) identisch zu dem in Schritt B) eingesetzte Katalysator (B) und wird ausgewählt aus der Gruppe bestehend aus Diazabicyclo[2.2.2]octan, Diazabicyclo[5.4.0]undec-7-en und 4-Dimethylaminopyridin.

In einer Ausführungsform des erfindungsgemäßen Verfahrens beträgt das Massenverhältnis des in Schritt A) eingesetzten Katalysators (A) 1 Gew.-% bis 100 Gew.%, bevorzugt 1 Gew.-% bis 20 Gew.-% und besonders bevorzugt 1 Gew.-% bis 10 Gew.-% bezogen auf die Masse des Kohlenstoff-Kohlenstoff Mehrfachbindungen enthaltenden Polyoxyalkylenpolyols, Organooxysilylverbindung und des Katalysators (A)

In einer Ausführungsform des erfindungsgemäßen Verfahrens beträgt das Massenverhältnis des in Schritt B) eingesetzten Katalysator (B) 1 Gew.-% bis 100 Gew.%, bevorzugt 1 Gew.-% bis 20 Gew.-% und besonders bevorzugt 1 Gew.-% bis 10 Gew.-% bezogen auf die Masse des Organooxysilyl-Endgruppen enthaltenden Polymers und des Katalysators (B).

Im Laufe ihrer Untersuchungen haben die Erfinder festgestellt, dass die Anwesenheit von Wasser für das Auslösen der Kondensationsreaktion, das heißt für die Bildung von Si-O-Si-Brücken zwischen den funktionalisierten Polyolmolekülen, nicht unbedingt erforderlich ist und ab einer gewissen Menge aufgrund der Hydrolyse von Organooxysilylbindungen sogar schädlich sein kann. Daher ist es bevorzugt, dass in Schritt B) die sämtliche Komponenten umfassende Mischung, welche erhitzt wird, einen Wassergehalt von ≤ 100 ppm (vorzugsweise ≤ 50 ppm) aufweist.

Ebenfalls in Übereinstimmung mit der gängigen Laborpraxis ist, dass Schritt B) in Abwesenheit einer Organooxysilylverbindung der Formel Si(X)ₙ(R₀)₄₋ₙ,
wobei gilt:
   X steht unabhängig voneinander für C1-C8-Alkoxy, C7-C20-Aralkoxy, C6-C14-Aroxy, C7-C20-Alkylaroxy, C1-C20- Acyloxy;
   R₀ steht unabhängig voneinander für gesättigtes oder ungesättigtes C1-C22-Alkyl, C6-C14-Aryl, C7-C14-Aralkyl, C7-C14- Alkylaryl und
   n ist 2, 3 oder 4,
durchgeführt wird. Mit anderen Worten wird das einzusetzende Organooxysilyl-Endgruppen enthaltende Polymer vor Schritt B) gereinigt und insbesondere von Organooxysilylverbindungen befreit, welche die Kondensationsreaktion in Schritt B) stören könnten. "Abwesenheit" bedeutet hierbei, dass die Organooxysilylverbindung höchstens in technisch unvermeidlichen Spuren anwesend sind und beispielsweise im 400 MHz ¹H-NMR-Spektrum einer Probe nicht mehr nachgewiesen werden können.

Die Erfindung betrifft ebenfalls eine Elastomer-Vorstufe, welche durch ein erfindungsgemäßes Verfahren erhältlich ist.

### Beispiele

Die vorliegende Erfindung wird durch die nachfolgenden Beispiele weiter beschrieben, ohne jedoch darauf beschränkt zu sein.

### Eingesetzte Polyole:

PET-1 Poly(oxypropylen)polyol, difunktionell, mit einer OH-Zahl von 112 mg_{KOH}/g
Polyol-A Kohlenstoff-Kohlenstoff Doppelbindungen enthaltendes Polyoxyalkylenpolyol, hergestellt gemäß der unten angegebenen Methode

### Alkylenoxid,:

- PO: Propylenoxid (Chemogas NV, 99,9%)

### Kohlenstoff-Kohlenstoff Doppelbindungen enhaltende Monomer:

- MSA: Maleinsäureanhydrid (Sigma-Aldrich, 99%)

### Eingesetzte Organooxysilylverbindungen:

- MeSi(OEt)₃: Methyltriethoxysilan, monofunktionelle Organooxysilylverbindung (Sigma-Aldrich, 99%)
- Me₂Si(OEt)₂: Dimethyldiethoxysilan, difunktionelle Organooxysilylverbindung (Sigma-Aldrich, 97%)
- Me₃Si(OEt): Trimethylethoxysilan, trifunktionelle Organooxysilylverbindung (Sigma-Aldrich, 98%)
- Si(OEt)₄: Tetraethoxysilan, tetrafunktionelle Organooxysilylverbindung (Sigma-Aldrich, >99%)
- MeSi(OMe)₃: Methyltrimethoxysilan, trifunktionelle Organooxysilylverbindung (Sigma-Aldrich, 98%)
- MeSi(OAc)₃: Methyltriacetoxyysilan, trifunktionelle Organooxysilylverbindung (Sigma-Aldrich, 90%)

### Eingesetzte Katalysatoren:

- DMC-: Katalysator hergestellt nach Beispiel 6 der WO-A 01/80994
- DBTL: Dibutylzinndilaurat (Sigma-Aldrich Chemie GmbH, 95%)
- BinDec: Bismuth neodecanoat (Sigma-Aldrich Chemie GmbH, k.a.)
- DBU: Diazabicycloundecen (Acros Organics, 98%)
- AMS: Ameisensäure (Honeywell Fluka, 98-100%)

### Verwendete Methoden:

Die Molekulargewichtserhöhung von funktionalisierten Polyolen durch Polykondensation wurde auf einem Rheometer Physica MCR 501 der Fa. Anton Paar, ausgestattet mit einem Messsystem D-PP15 (Platte-Platte-Konfiguration mit einem Plattenabstand von 1 mm), untersucht.

Je eine Probe (0,5 g) des funktionalisierten Polyols wurde auf der Rheometerplatte des Rheometers mit Katalysator gemischt und bei 80 °C und einer dynamischen Oszillation von 1 Hz einer 10%igen Scherung unterworfen. Über 120 Minuten wurde je 20 Sekunden der Speicher- (G') und Verlustmodul (G") gemessen. Als Gelpunkt wurde der Zeitpunkt gewählt, an dem Speichermodul (G') und Verlustmodul (G") gleich groß sind (G'/G"=1).

Für ¹H-NMR Spektren wurde die Probe in deuteriertem Chloroform gelöst und auf einem Spektrometer der Firma Bruker (AV400, 400 MHz) vermessen.

IR-Spektren wurden auf einem Spektrometer der Firma Bruker (Alpha P FT-IR) aufgenommen.

Herstellung von Polyol A (Kohlenstoff-Kohlenstoff-Doppelbindungen enthaltendes Polyoxyalkylenpolyol):

Ein im erfindungsgemäßen Verfahren geeignetes Kohlenstoff-Kohlenstoff-Doppelbindungen enthaltendes Polyoxyalkylenpolyol für die Funktionalisierung mit Organooxysilylverbindung lässt sich durch das folgende Verfahren herstellen:

### Schritt α:

In einem 970 ml Druckreaktor ausgestattet mit einem Gaseintragsrührer wurde eine Mischung aus DMC-Katalysator (nach Beispiel 6 von WO 01/80994 A1; 161 mg) und PET-1 (125 g) vorgelegt und 30 min bei 130 °C in einem partiellen Vakuum (50 mbar) unter Durchleiten von Argon durch die Reaktionsmischung gerührt (800 U/min).

### Schritt β:

Nach Aufpressen von 15 bar CO₂, wobei ein leichter Temperaturabfall zu beobachten war, und Wiedererreichen einer Temperatur von 130 °C wurden 3,0 g Propylenoxid mit Hilfe einer HPLC-Pumpe (3 ml/min) zudosiert. Die Reaktionsmischung wurde 20 min bei 130 °C gerührt (800 U/min). Die Zugabe von 3,0 g Propylenoxid wurde ein zweites und drittes Mal wiederholt.

### Schritt γ:

Die Temperatur wurde auf 100 °C nachgeregelt und während der nachfolgenden Schritte der Druck im Druckreaktor durch Nachdosieren von CO₂ mit Hilfe eines Massenflussreglers bei 15 bar gehalten. Es wurden unter Rühren weitere 355 g einer Monomermischung (14 Gew.-% Maleinsäureanhydrid gelöst in Propylenoxid) über eine HPLC-Pumpe (3 mL/min) zudosiert, wobei die Reaktionsmischung weiterhin gerührt wurde (800 U/min). Nach Ende der Zugabe von Monomermischung (14 Gew.-% Maleinsäureanhydrid gelöst in Propylenoxid) wurde die Reaktionsmischung weitere 60 min bei 100 °C gerührt. Durch Abkühlen des Druckreaktors im Eisbad wurde die Reaktion beendet, der Überdruck abgelassen und das resultierende Produkt in Übernahme der in WO 2015/032737 A1 beschriebenen Methoden analysiert. Das ¹H-NMR-Spektrum des Polyols ist in FIG. 1 wiedergegeben.

### Molares Verhältnis von Carbonatgruppen zu Ethergruppen (e/f): 0,17

Der Anteil an Carbonateinheiten in den Wiederholungseinheiten des Polyetherestercarbonatpolyols (A_{Carbonat} in %): 12,9

Der Anteil der über den Einbau des Maleinsäureanhydrids resultierenden Doppelbindungen in den Wiederholungseinheiten des Polyetherestercarbonatpolyols (A_{Doppelbindung} in Gew.-%): 10,0

### Molekulargewicht (Mₙ in g/mol):4421

### Polydispersität:1,2

### Vergleichsbeispiel 1: Herstellung eines Organooxysilyl-Endgruppen enthaltenden Polymers durch Umsetzung eines ungesättigten Polyoxyalkylenpolyols mit einer bifunktionellen Organooxysilylverbindung (F=1) und Molekulargewichtserhöhung des erhaltenen Produktes

### Schritt A:

In einem 100 mL Zweihalskolben wurde Polyol A (10,0 g) und Trimethylmonoethoxysilan (20,0 g) zusammengegeben. Der Kolben wurde im Anschluss mit einem auf 110 °C beheizten Rückflusskühler versehen. Die Mischung wurde unter Rühren (300 U/min) auf Reaktionstemperatur 110 °C gebracht und mit DBU (1 Gew.-%, 100 mg) versehen. Anschließend wurde die Reaktionsmischung weitere 2 h bei 110°C gerührt. Nach Abschluss der Reaktion wurde das unreagierte Dimethyldiethoxysilan bei vermindertem Druck entfernt. Das Produkt wurde mit ¹H-NMR-Spektroskopie und IR-Spektroskopie analysiert und die Funktionalisierung des Polyols bestätigt.

### Schritt B:

Für den Kondensationsversuch wurden 0,5 g des funktionalisierten ungesättigten Polyoxyalkylenpolyols mit DBU (2 Gew.-%, 10 mg) gemischt und am Rheometer eingesetzt. Es wurde kein Gelpunkt beobachtet.

### Vergleichsbeispiel 2: Herstellung eines Organooxysilyl-Endgruppen enthaltenden Polymers durch Umsetzung eines ungesättigten Polyoxyalkylenpolyols mit einer bifunktionellen Organooxysilylverbindung (F=2) und Molekulargewichtserhöhung des erhaltenen Produktes

### Schritt A:

In einem 100 mL Zweihalskolben wurde Polyol A (10,0 g) und Dimethyldiethoxysilan (20,0 g) zusammengegeben. Der Kolben wurde im Anschluss mit einem auf 110 °C beheizten Rückflusskühler versehen. Die Mischung wurde unter Rühren (300 U/min) auf Reaktionstemperatur 110 °C gebracht und mit DBU (1 Gew.-%, 100 mg) versehen. Anschließend wurde die Reaktionsmischung weitere 2 h bei 110°C gerührt. Nach Abschluss der Reaktion wurde das unreagierte Dimethyldiethoxysilan bei vermindertem Druck entfernt. Das Produkt wurde mit ¹H-NMR-Spektroskopie und IR-Spektroskopie analysiert und die Funktionalisierung des Polyols bestätigt.

### Schritt B:

Für den Kondensationsversuch wurden 0,5 g des funktionalisierten ungesättigten Polyoxyalkylenpolyols mit DBU (2 Gew.-%, 10 mg) gemischt und am Rheometer eingesetzt. Es wurde kein Gelpunkt beobachtet.

### Beispiel 3: Herstellung eines Organooxysilyl-Endgruppen enthaltenden Polymers durch Umsetzung eines ungesättigten Polyoxyalkylenpolyols mit einer trifunktionellen Organooxysilylverbindung (F = 3) und Molekulargewichtserhöhung des erhaltenen Produktes

### Schritt A:

In einem 100 mL Zweihalskolben wurde Polyol A (10,0 g) und Methyltriethoxysilan (20,0 g) zusammengegeben. Der Kolben wurde im Anschluss mit einem auf 110 °C beheizten Rückflusskühler versehen. Die Mischung wurde unter Rühren (300 U/min) auf Reaktionstemperatur 110 °C gebracht und mit DBU (1 Gew.-%, 100 mg) versehen. Anschließend wurde die Reaktionsmischung weitere 2 h bei 110 °C gerührt. Nach Abschluss der Reaktion wurde das unreagierte Methyltriethoxysilan bei vermindertem Druck entfernt. Das Produkt wurde mit ¹H-NMR-Spektroskopie und IR-Spektroskopie analysiert und die Funktionalisierung des Polyols bestätigt.

### Schritt B:

Für den Kondensationsversuch wurden 0,5 g des funktionalisierten ungesättigten Polyoxyalkylenpolyols mit 1 Gewichts-% DBU gemischt und am Rheometer eingesetzt. Der Gelpunkt trat nach 89,3 Minuten ein. Das Speichermodul G' gemessen nach 1 Stunde betrug 12,7 Pa.

### Beispiel 4: Herstellung eines Organooxysilyl-Endgruppen enthaltenden Polymers durch Umsetzung eines ungesättigten Polyoxyalkylenpolyols mit einer trifunktionellen Organooxysilylverbindung (F =3)

### Schritt A:

In einem 100 mL Zweihalskolben wurde Polyol A (10,0 g) und Methyltrimethoxysilan (20,0 g) zusammengegeben. Der Kolben wurde im Anschluss mit einem auf 110 °C beheizten Rückflusskühler versehen. Die Mischung wurde unter Rühren (300 U/min) auf Reaktionstemperatur 110 °C gebracht und mit DBU (1 Gew.-%, 100 mg) versehen. Anschließend wurde die Reaktionsmischung weitere 2 h bei 110 °C gerührt. Nach Abschluss der Reaktion wurde das unreagierte Methyltrimethoxysilan bei vermindertem Druck entfernt. Das Produkt wurde mit ¹H-NMR-Spektroskopie und IR-Spektroskopie analysiert und die Funktionalisierung des Polyols bestätigt.

### Beispiel 5: Herstellung eines Organooxysilyl-Endgruppen enthaltenden Polymers durch Umsetzung eines ungesättigten Polyoxyalkylenpolyols mit einer tetrafunktionellen Organooxysilylverbindung (F = 4) und Molekulargewichtserhöhung des erhaltenen Produktes

### Schritt A:

In einem 100 mL Zweihalskolben wurde Polyol A (10,0 g) und Tetraethoxysilan (20,0 g) zusammengegeben. Der Kolben wurde im Anschluss mit einem auf 110 °C beheizten Rückflusskühler versehen. Die Mischung wurde unter Rühren (300 U/min) auf Reaktionstemperatur 110 °C gebracht und mit DBU (1 Gew.-%, 100 mg) versehen. Anschließend wurde die Reaktionsmischung weitere 2 h bei 110°C gerührt. Nach Abschluss der Reaktion wurde das unreagierte Tetraethoxysilan bei vermindertem Druck entfernt. Das Produkt wurde mit ¹H-NMR-Spektroskopie und IR-Spektroskopie analysiert und die Funktionalisierung des Polyols bestätigt.

### Schritt B:

Für den Kondensationsversuch wurden 0,5 g des funktionalisierten ungesättigten Polyoxyalkylenpolyols mit DBU (1 Gew.-%, 5 mg) gemischt und am Rheometer eingesetzt. Der Gelpunkt wurde nach 31,5 min beobachtet. Das Speichermodul G' wurde nach einer Stunde notiert. Das Aushärtungsverhalten ist in FIG. 2 wiedergegeben. Die Bezeichnung "G'" in FIG. 2 bezieht sich auf das Speichermodul, die Bezeichnung "G"" auf das Verlustmodul, " t " bezeichnet die Zeit in Sekunden.

### Vergleichsbeispiel 6: Kondensationsversuch unter Einsatz eines ungesättigten Polyoxyalkylenpolyols

### Schritt A:

In einem Kolben wurden 9,0 g Polyol-A und DBU (1 Gew.-%, 90 mg) vermischt. Die Mischung wurde unter Rühren (300 U/min) auf Reaktionstemperatur (110 °C) gebracht. Anschließend wurde Wasser (400 mg) in die Reaktionsmischung gegeben. Die Reaktionsmischung wurde für 2 h gerührt. Nach Abschluss der Reaktion wurden die flüchtigen Bestandteile bei vermindertem Druck entfernt.

### Schritt B:

Für den Kondensationsversuch wurden 0,5 g des nicht funktionalisierten ungesättigten Polyoxyalkylenpolyols mit DBU (2 Gew.-%, 10 mg) gemischt und am Rheometer eingesetzt. Es wurde kein Gelpunkt beobachtet. Dieses ist in Übereinstimmung mit der Annahme, dass das funktionalisierte Polyol keine reaktiven Stellen zur Ausbildung von Si-O-Si-Gruppen aufweist.

### Vergleichsbeispiel 7: Herstellung eines Organooxysilyl-Endgruppen enthaltenden Polymers durch Umsetzung eines ungesättigten Polyoxyalkylenpolyols mit einer trifunktionellen Organooxysilylverbindung (F = 3) unter Einsatz von Ameisensäure als Katalysator

Es wurde analog zu Beispiel 2 verfahren, jedoch wurde als Katalysator 1 Gew.-% AMS eingesetzt und die Reaktionstemperatur betrug 95 °C. IR-spektroskopische Analyse des Produkts zeigte, dass die O-H-Streckschwingungsbande um 3500 cm⁻¹ noch nicht vollständig verschwunden war, so dass auf einen unvollständigen Reaktionsumsatz bei diesen Bedingungen geschlossen wurde.

### Vergleichsbeispiel 8: Herstellung eines Organooxysilyl-Endgruppen enthaltenden Polymers durch Umsetzung eines ungesättigten Polyoxyalkylenpolyols mit einer trifunktionellen Organooxysilylverbindung (F = 3)

In einem 100 mL Zweihalskolben wurde Polyol A (10,0 g) und Methyltrimethoxysilan (20,0 g) zusammengegeben. Der Kolben wurde im Anschluss mit einem auf 110 °C beheizten Rückflusskühler versehen. Die Mischung wurde unter Rühren (300 U/min) auf Reaktionstemperatur 110 °C gebracht und mit DBTL (1 Gew.-%, 100 mg) versehen. Anschließend wurde die Reaktionsmischung weitere 2 h bei 110 °C gerührt. Nach Abschluss der Reaktion wurde das unreagierte Methyltrimethoxysilan bei vermindertem Druck entfernt. Das Produkt wurde mit ¹H-NMR-Spektroskopie und IR-Spektroskopie analysiert, jedoch konnte die Funktionalisierung des Polyols nicht bestätigt werden.

### Vergleichsbeispiel 9: Herstellung eines Organooxysilyl-Endgruppen enthaltenden Polymers durch Umsetzung eines ungesättigten Polyoxyalkylenpolyols mit einer trifunktionellen Organooxysilylverbindung (F = 3)

In einem 100 mL Zweihalskolben wurde Polyol A (10,0 g) und Methyltriethoxysilan (20,0 g) zusammengegeben. Der Kolben wurde im Anschluss mit einem auf 110 °C beheizten Rückflusskühler versehen. Die Mischung wurde unter Rühren (300 U/min) auf Reaktionstemperatur 110 °C gebracht und mit Bismuth neodecanoat (1 Gew.-%, 100 mg) versehen. Anschließend wurde die Reaktionsmischung weitere 2 h bei 110 °C gerührt. Nach Abschluss der Reaktion wurde das unreagierte Methyltriethoxysilan bei vermindertem Druck entfernt. Das Produkt wurde mit ¹H-NMR-Spektroskopie und IR-Spektroskopie, jedoch konnte die Funktionalisierung des Polyols nicht bestätigt werden.

### Vergleichsbeispiel 10: Herstellung eines Organooxysilyl-Endgruppen enthaltenden Polymers durch Umsetzung eines ungesättigten Polyoxyalkylenpolyols mit einer trifunktionellen Organooxysilylverbindung (F = 3) und Molekulargewichtserhöhung des erhaltenen Produktes

In einem 100 mL Zweihalskolben wurde Polyol A (10,0 g) und Methyltriacetoxysilan (20,0 g) zusammengegeben. Der Kolben wurde im Anschluss mit einem auf 110 °C beheizten Rückflusskühler versehen. Die Mischung wurde unter Rühren (300 U/min) auf Reaktionstemperatur 110 °C gebracht und mit DBU (1 Gew.-%, 100 mg) versehen. Anschließend wurde die Reaktionsmischung weitere 2 h bei 110 °C gerührt. Nach Abschluss der Reaktion wurde das unreagierte Methyltriacetoxysilan bei vermindertem Druck entfernt. Das Produkt wurde mit ¹H-NMR-Spektroskopie und IR-Spektroskopie, jedoch konnte die Funktionalisierung des Polyols nicht bestätigt werden.

**Tabelle 1: Übersicht der Resultate der Herstellung von der Elastomer-Vorstufe**

| Beispiel | Si(X)ₙ(R)₄₋ₙ | n | Katalysator (A)=(B) | m(Kat(A)) [Gew.-%.] | m(Kat(B)) [Gew.-%.] | Gelpunkt [min] | G' (60 min) [Pa] |
|---|---|---|---|---|---|---|---|
| 1 (Vgl.) | Me₃Si(OEt) | 1 | DBU | 1 | 1 | n.b. | n.b. |
| 2 (Vgl.) | Me₂Si(OEt)₂ | 2 | DBU | 1 | 1 | n.b. | n.b. |
| 3 | MeSi(OEt)₃ | 3 | DBU | 1 | 1 | 89,3 | 12,7 |
| 4 | MeSi(OMe)₃ | 3 | DBU | 1 | 1 | 84,5 | 13,0 |
| 5 | Si(OEt)₄ | 4 | DBU | 1 | 1 | 31,7 | 281 |
| 6 (Vgl.) | - | - | DBU | 0 | 1 | n.b. | n.b. |
| 7 (Vgl.) | MeSi(OEt)₃ | 3 | AMS | 1 | - | n.b. | n.b. |
| 8 (Vgl.) | MeSi(OMe)₃ | 3 | DBTL | 1 | - | n.b. | n.b. |
| 9 (Vgl.) | MeSi(OMe)₃ | 3 | BinDec | 1 | - | n.b. | n.b. |
| 10 (Vgl.) | MeSi(OAc)₃ | 3 | DBU | 1 | - | n.b. | n.b. |

| | | | | | | | |
|---|---|---|---|---|---|---|---|
| Vgl. = Vergleich; n.b. = nicht beobachtet | | | | | | | |

Die Vergleichsbeispiele 1 und 2 zeigen, dass im Falle einer Funktionalisierung mit mono- oder bifunktionellen Organosilylgruppen keine Vernetzung der entsprechenden Produkte erreicht werden kann. Beispiele 6-9 und 11 zeigen, dass die Gegenwart eines Amin-basierten Katalysators die Voraussetzung für das Gelingen von sowohl Schritt A, als auch Schritt B ist. Die in Vergleichsbeispiel 7-10 aufgelisteten Verbindungen zeigten hingegen keine katalytische Aktivität.

### Beispiel 12: Herstellung eines Organooxysilyl-Endgruppen enthaltenden Polymers durch Umsetzung eines ungesättigten Polyoxyalkylenpolyols mit einer tetrafunktionellen Organooxysilylverbindung (F = 4) und Molekulargewichtserhöhung des erhaltenen Produktes

Das in Beispiel 5 hergestellte, funktionalisierte und ungesättigte Polyoxyalkylenpolyol wurde für diesen Kondensationsversuch verwendet.

Für den Kondensationsversuch wurden 0,5 g des funktionalisierten ungesättigten Polyoxyalkylenpolyols mit DBU (2 Gew.-%, 10 mg) gemischt und am Rheometer eingesetzt. Der Gelpunkt wurde nach 13,7 min beobachtet. Das Speichermodul G' wurde nach einer Stunde notiert.

### Beispiel 13: Herstellung eines Organooxysilyl-Endgruppen enthaltenden Polymers durch Umsetzung eines ungesättigten Polyoxyalkylenpolyols mit einer tetrafunktionellen Organooxysilylverbindung (F = 4) und Molekulargewichtserhöhung des erhaltenen Produktes

Das in Beispiel 5 hergestellte, funktionalisierte und ungesättigte Polyoxyalkylenpolyol wurde für diesen Kondensationsversuch verwendet.

Für den Kondensationsversuch wurden 0,5 g des funktionalisierten ungesättigten Polyoxyalkylenpolyols mit DBU (4 Gew.-%, 20 mg) gemischt und am Rheometer eingesetzt. Der Gelpunkt wurde nach 7,0 min beobachtet. Das Speichermodul G' wurde nach einer Stunde notiert.

### Beispiel 14: Herstellung eines Organooxysilyl-Endgruppen enthaltenden Polymers durch Umsetzung eines ungesättigten Polyoxyalkylenpolyols mit einer tetrafunktionellen Organooxysilylverbindung (F = 4) und Molekulargewichtserhöhung des erhaltenen Produktes

Das in Beispiel 5 hergestellte, funktionalisierte und ungesättigte Polyoxyalkylenpolyol wurde für diesen Kondensationsversuch verwendet.

Für den Kondensationsversuch wurden 0,5 g des funktionalisierten ungesättigten Polyoxyalkylenpolyols mit DBU (8 Gew.-%, 40 mg) gemischt und am Rheometer eingesetzt. Der Gelpunkt wurde nach 4,5 min beobachtet. Das Speichermodul G' wurde nach einer Stunde notiert.

**Tabelle 2: Übersicht der Resultate der Herstellung von der Elastomer-Vorstufe unter unterschiedlichen Katalysatorkonzentration von DBU in Schritt B**

| Beispiel | Si(X)ₙ(R)₄₋ₙ | n | Katalysator (A)=(B) | m(Kat(A)) [Gew.-%] | m(Kat(B)) [Gew.-%.] | Gelpunkt [min] | G' (60 min) [Pa] |
|---|---|---|---|---|---|---|---|
| 11 (Vgl.) | Si(OEt)₄ | 4 | DBU | 1 | 0 | n.b. | n.b. |
| 5 | Si(OEt)₄ | 4 | DBU | 1 | 1 | 31,7 | 281 |
| 12 | Si(OEt)₄ | 4 | DBU | 1 | 2 | 13,7 | 1695 |
| 13 | Si(OEt)₄ | 4 | DBU | 1 | 4 | 7,0 | 2825 |
| 14 | Si(OEt)₄ | 4 | DBU | 1 | 8 | 4,5 | 7405 |

Die Beispiele 5, 12-14, sowie Vergleichsbeispiel 11 zeigen nicht nur, daß die Anwesenheit Aminbasierter Katalysatoren essenziell ist, sondern auch, daß die Konzentration eben jener Katalysatoren Einfluß auf den Verlauf der Reaktion und die Eigenschaften des resultierenden Produktes hat.

## Patentansprüche

1. Verfahren zur Herstellung eines Organooxysilyl-Endgruppen enthaltenden Polymers, **dadurch gekennzeichnet, dass** das Verfahren den Schritt umfasst:
A) Reaktion eines Kohlenstoff-Kohlenstoff Mehrfachbindungen enthaltenden Polyoxyalkylenpolyols, bevorzugt eines Kohlenstoff-Kohlenstoff Mehrfachbindungen enthaltenden Polyethercarbonatpolyols, mit einer Organooxysilylverbindung der Formel Si(X)ₙ(R₀)₄₋ₙ in Gegenwart eines Katalysators (A),
wobei gilt:
X steht unabhängig voneinander für C1-C8-Alkoxy, C7-C20-Aralkoxy, C6-C14-Aroxy, C7-C20-Alkylaroxy, C1-C20-Acyloxy;
R₀ steht unabhängig voneinander für gesättigtes oder ungesättigtes C1-C22-Alkyl, C6-C14-Aryl, C7-C14-Aralkyl, C7-C14-Alkylaryl
und n ist 3 oder 4.

2. Verfahren gemäß Anspruch 1, wobei Kohlenstoff-Kohlenstoff mehrfachbindungshaltige Polyoxyalkylenpolyol erhältlich ist durch Anlagerung von Alkylenoxid, Kohlenstoff-Kohlenstoff mehrfachbindungshaltiges Monomer und CO₂ an H-funktionelle Startersubstanz in Gegenwart eines Doppelmetallcyanid-Katalysators.

3. Verfahren gemäß Anspruch 3, wobei der Anteil des Kohlenstoff-Kohlenstoff mehrfachbindungshaltigen Monomers ≥ 0,1 Gew.-% bis ≤ 60 Gew.-%, bevorzugt > 0,5 Gew.-% bis ≤ 30 Gew.-% und besonders bevorzugt ≥ 1,0 Gew.-% bis ≤ 15 Gew.-%., bezogen auf die Gesamtstoffmenge an eingesetztem Alkylenoxid, Kohlendioxid und des Kohlenstoff-Kohlenstoff mehrfachbindungshaltigen Monomers beträgt.

4. Verfahren gemäß einem der Ansprüche 2 oder 3, wobei das mindestens eine Kohlenstoff-Kohlenstoff mehrfachbindungshaltige Monomer ausgewählt ist aus mindestens einem der Monomere aus einer oder mehrerer der Gruppen bestehend aus
(a) Allylglycidylether, Vinylcyclohexenoxid, Cyclooctadienmonoepoxid, Cyclododecatrienmonoepoxid, Butadienmonoepoxid, Isoprenmonoepoxid, Limonenoxid, 1,4-Divinylbenzolmonoepoxid, 1,3-Divinylbenzolmonoepoxid, Glycidylester ungesättigter Fettsäuren, teilweise epoxidierte Fette und Öle und/oder deren Mischungen
(b) Alkylenoxid mit Mehrfachbindung der allgemeinen Formel (IX) ist: 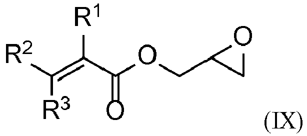 wobei R₁ bis R₃ unabhängig voneinander H, Halogen, substituierte oder nicht-substituierte C1-C22-Alkyl, substituierte oder nicht-substituierte C6-C12 Aryl sind
(c) cyclisches Anhydrid der Formel (X), (XI) oder (XII) entspricht: 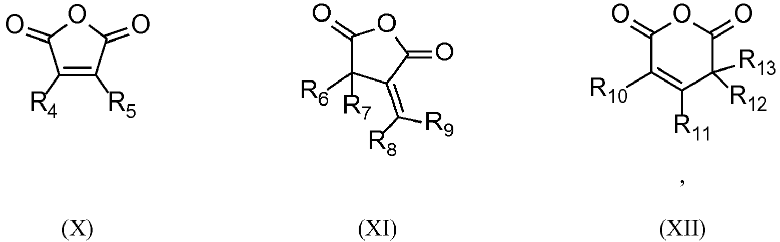 wobei R₁ bis R₁₀ unabhängig voneinander H, Halogen, substituierte oder nicht-substituierte C1-C22-Alkyl, substituierte oder nicht-substituierte C6-C12 Aryl sind,
(d) 4-Cyclohexen-1,2-disäureanhydrid, 4-Methyl-4-cyclohexen-1,2-disäureanhydrid, 5,6-Norbornen-2,3-disäureanhydrid, Allyl-5,6-norbornen-2,3-disäureanhydrid, Dodecenylbernsteinsäureanhydrid, Tetradecenylbernsteinsäureanhydrid, Hexadecenylbernsteinsäureanhydrid und Octadecenylbernsteinsäureanhydrid
und
(e) Alkylenoxid mit Dreifachbindung der allgemeinen Formel (XIII) ist: 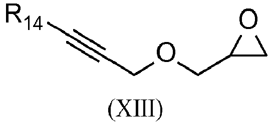 R14 steht unabhängig voneinander für gesättigtes oder ungesättigtes C1-C22-Alkyl, C6-C14-Aryl, C7-C14-Aralkyl, C7-C14-Alkylaryl.

5. Verfahren gemäß Anspruch 4, wobei das mindestens eine Kohlenstoff-Kohlenstoff Mehrfachbindungen enthaltende Monomere ausgewählt wird aus einer oder mehrerer der Gruppen bestehend aus
(a) Allylglycidylether, Vinylcyclohexenoxid und Limonenoxid
(b) Glycidylacrylat und Glycidylmethacrylat,
(c) Maleinsäureanhydrid und Itaconsäureanhydrid, cis-1,2,3,6-Tetrahydrophthalic anhydride
(d) 4-Cyclohexen-1,2-disäureanhydrid und 5,6-Norbornen-2,3-disäureanhydrid und
(e) Glycidylpropargylether.

6. Verfahren gemäß einem der Ansprüche 1 bis 5, wobei das Kohlenstoff-Kohlenstoff Mehrfachbindungen enthaltende Polyethercarbonatpolyol einen CO₂ Anteil von 3 Gew.-% bis 44 Gew.-% bevorzugt von 5 Gew.-% bis 25 Gew.-% aufweist.

7. Verfahren gemäß einem der Ansprüche 1 bis 6, wobei als Organooxysilylverbindung mindestens einer Verbindung ausgewählt wird aus einer oder mehrerer der Gruppen bestehend aus Trimethoxysilan, Methyltrimethoxysilan, Phenyltrimethoxysilan, Triethoxysilan, Methyltriethoxysilan, Methyltripropoxysilan, Hexadecyltrimethoxysilan, Octodecyltrimethoxysilan, *n*-Octyltrimethoxysilan, *n*-Octyltriethoxysilan, Propyltrimethoxysilan, Propyltriethoxysilan, N-Butyltrimethoxysilan, n-Butyltriethoxysilan, *iso-*Butyltriethoxysilan, 3-Chloropropyltrimethoxysilan, 3-Chloropropyltriethoxysilan, 3-Chloropropylmethyldiethoxysilan, Chloromethyltrimethoxysilan, Chloromethyltriethoxysilan, Dichloromethyltriethoxysilan Tetramethoxysilan, Tetraethoxysilan und Tetraisopropoxysilan.

8. Verfahren gemäß Anspruch 7, wobei die Organooxysilylverbindung mindestens eine Verbindung ausgewählt wird aus der Gruppen bestehend aus Trimethoxysilan, Triethoxysilan Tetramethoxysilan, Tetraethoxysilan und Tetraisopropoxysilan.

9. Verfahren gemäß einem der Ansprüche 1 bis 8, wobei der Schritt A) eingesetzte Katalysator (A) ausgewählt ist aus der Gruppe bestehend aus:
(a) Amine der allgemeinen Formel (XIV): 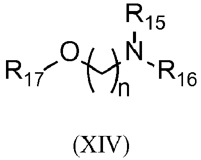 wobei gilt:
R15 und R16 sind unabhängig voneinander Wasserstoff, Alkyl oder Aryl; oder
R15 und R16 bilden gemeinsam mit dem sie tragenden N-Atom einen aliphatischen, ungesättigten oder aromatischen Heterozyklus;
n ist eine ganze Zahl von 1 bis 10;
R17 ist Wasserstoff, Alkyl oder Aryl; oder
R17 steht für -(CH2)x-N(R18)(R19), wobei gilt:
R18 und R19 sind unabhängig voneinander Wasserstoff, Alkyl oder Aryl; oder
R18 und R19 bilden gemeinsam mit dem sie tragenden N-Atom einen aliphatischen, ungesättigten oder aromatischen Heterozyklus;
x ist eine ganze Zahl von 1 bis 10;
(b) Amine der allgemeinen Formel (XV): 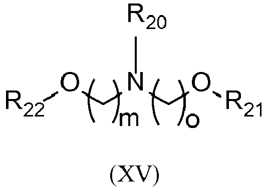 wobei gilt:
R20 ist Wasserstoff, Alkyl oder Aryl;
R21 und R22 sind unabhängig voneinander Wasserstoff, Alkyl oder Aryl;
m und o sind unabhängig voneinander eine ganze Zahl von 1 bis 10;
und/oder:
(c) Diazabicyclo[2.2.2]octan, Diazabicyclo[5.4.0]undec-7-en, Dialkylbenzylamin, Dimethylpiperazin, 2,2'-Dimorpholinyldiethylether, 4-Dimethylaminopyridin und Pyridin.

10. Verfahren gemäß Anspruch 9, wobei der Schritt A) in eingesetzte Katalysator (A) ausgewählt ist aus der Gruppe bestehend aus Diazabicyclo[2.2.2]octan, Diazabicyclo[5.4.0]undec-7-en und 4-Dimethylaminopyridin.

11. Organooxysilyl-Endgruppen enthaltendes Polymer, erhältlich durch ein Verfahren gemäß einem der Ansprüche 1 bis 10, wobei das Organooxysilyl-Endgruppen ein zahlenmittleren Molekulargewicht Mₙ von ≥ 500 g/mol bis ≤ 100000 g/mol besonders bevorzugt ≥ 1000 g/mol bis ≤ 50000 g/mol aufweist, welche mittels GPC bestimmt worden ist.

12. Verfahren zur Herstellung einer Elastomer-Vorstufe, **dadurch gekennzeichnet, dass** das Verfahren den Schritt umfasst:
B) Erhitzen eines Organooxysilyl-Endgruppen enthaltenden Polymers gemäß Anspruch 11 auf eine Temperatur von ≥ 65 °C in Gegenwart eines Katalysators (B).

13. Verfahren gemäß Anspruch 12, wobei der in Schritt B) eingesetzte Katalysator (B) ausgewählt ist aus der Gruppe bestehend aus:
(a) Amine der allgemeinen Formel (XIV): 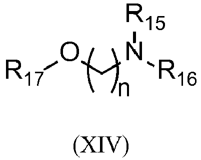 wobei gilt:
R15 und R16 sind unabhängig voneinander Wasserstoff, Alkyl oder Aryl; oder
R15 und R16 bilden gemeinsam mit dem sie tragenden N-Atom einen aliphatischen, ungesättigten oder aromatischen Heterozyklus;
n ist eine ganze Zahl von 1 bis 10;
R17 ist Wasserstoff, Alkyl oder Aryl; oder
R17 steht für -(CH2)x-N(R18)(R19), wobei gilt:
R18 und R19 sind unabhängig voneinander Wasserstoff, Alkyl oder Aryl; oder
R18 und R19 bilden gemeinsam mit dem sie tragenden N-Atom einen aliphatischen, ungesättigten oder aromatischen Heterozyklus;
x ist eine ganze Zahl von 1 bis 10;
(b) Amine der allgemeinen Formel (XV): 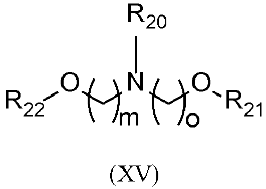 wobei gilt:
R20 ist Wasserstoff, Alkyl oder Aryl;
R21 und R22 sind unabhängig voneinander Wasserstoff, Alkyl oder Aryl;
m und o sind unabhängig voneinander eine ganze Zahl von 1 bis 10;
und/oder:
(c) Diazabicyclo[2.2.2]octan, Diazabicyclo[5.4.0]undec-7-en, Dialkylbenzylamin, Dimethylpiperazin, 2,2'-Dimorpholinyldiethylether, 4-Dimethylaminopyridin und Pyridin.

14. Verfahren gemäß Anspruch 13, wobei der Schritt B) in eingesetzte Katalysator (B) ausgewählt ist aus der Gruppe bestehend aus Diazabicyclo[2.2.2]octan, Diazabicyclo[5.4.0]undec-7-en und 4-Dimethylaminopyridin.

15. Elastomer-Vorstufe, erhältlich durch ein Verfahren gemäß einem der Ansprüche 12 bis 14.
